(19) Europäisches Patentamt
European Patent Office
Office européen des brevets

(11) **EP 3 792 368 A1**

(12) **DEMANDE DE BREVET EUROPEEN**

(43) Date de publication:
**17.03.2021 Bulletin 2021/11**

(51) Int Cl.:
*C14B 1/28* *(2006.01)* *G06Q 10/08* *(2012.01)*
*G06Q 10/00* *(2012.01)*

(21) Numéro de dépôt: **20020401.4**

(22) Date de dépôt: **07.09.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **12.09.2019 FR 1910088**

(71) Demandeur: **LESA - HIDEXE S.A**
**1468 Luxembourg (LU)**

(72) Inventeur: **Gilet, Johann Wilhelm**
**9990 Weiswampach (LU)**

# (54) PROCÉDÉ D'OPTIMISATION DE LOTS DE PRODUITS À GRADE HOMOGÈNE D'UNE PRODUCTION MULTISITE À QUALITÉ ALÉATOIRE, ET DISPOSITIF DE TANNERIE

(57) Un procédé d'optimisation, et un dispositif de tannerie (DT), pour l'optimisation de lots de produits (LO) de tanneries, constitué par : une plateforme (CL) de commerce ; une multitude de tanneries (F1, .... Fi) distantes ; des moyens informatiques et logiciels de gradation (23) des produits (1ij) ; des moyens informatiques et logiciels de filtration par le grade du stock disponible (25).

Des moyens informatiques et logiciels de traitement des requêtes (15) reçoivent d'un acheteur (A, Ak) de lot requis (LRkr) : au moins le grade (Gkr) requis, un paramètre complémentaire (PCkr) de sélection, un paramètre volumique (PVkr) ; et un paramètre d' optimisation (PO, POkr), indiquant un paramètre numérique de contrainte (PN, PNkr) de l' optimisation.

Des moyens informatiques et logiciels d'optimisation de lots (26), effectuent l'optimisation paramétrique (OPC) par la maximisation ou la minimisation du paramètre numérique de contrainte (PN) choisi selon le paramètre d'optimisation (PO)

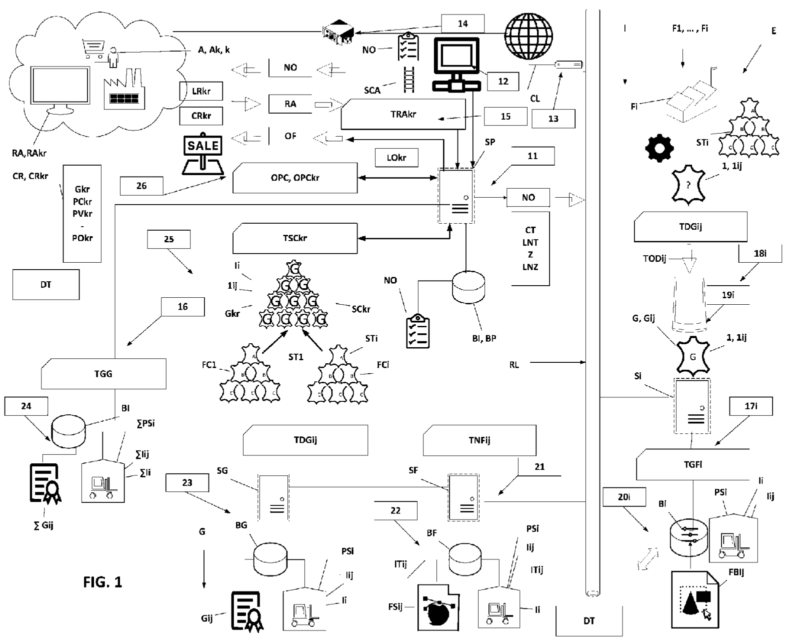

FIG. 1

EP 3 792 368 A1

## Description

### Domaine technique

L'invention se rapporte au domaine technique de l'optimisation paramétrique pour la constitution de lots combinés optimisés, conformes à un ensemble de critères imposés par la requête d'achat d'acheteurs pour un lot requis normé d'un produit brut transformé.

D'une part, l'invention s'applique spécifiquement au cas où les lots requis sont fournis par un écosystème industriel multisite, incluant une multitude d'usines fournisseuses distantes d'une même industrie de transformation, produisant ces produits avec des défauts topologiques et/ou géométriques et une qualité aléatoires.

D'autre part, l'invention concerne spécifiquement le domaine des industries de transformation, ou la valeur d'utilisation et les critères de requête d'un lot de produits bruts transformés requis par un acheteur doivent respecter, pour satisfaire son besoin, un ensemble de critères de requête comprenant au moins trois paramètres de spécifications propres à l'acheteur et donc différents pour chaque requête : un paramètre de grade de qualité topologique, basé sur une norme de qualité topologique; un paramètre volumique d'indication de la quantité des produits; mais également, au moins un paramètre complémentaire de sélection, lié par exemple à la géométrie globale des produits du lot requis, ou à la répartition des usines fournisseuses, ou à une variable extensive (c'est à dire sommable, telle que le poids) des produits.

De plus, l'invention concerne spécifiquement les domaines industriels ou les deux variables, constituées par le paramètre volumique et par le paramètre complémentaire requis, sont liées et non indépendantes. C'est-à-dire que le choix de la valeur de l'un de ces deux paramètres influence la valeur de l'autre paramètre; et que le degré de liberté des variables constituées des paramètres de l'ensemble des critères de requête est inférieur à leur nombre.

Le domaine industriel principal d'application de l'invention est l'industrie de la tannerie.

### Problème technique

Dans le domaine des industries de transformation auquel s'applique l' invention, les critères de requête d'un lot de produits par les acheteurs présentent en outre généralement les caractéristiques suivantes :

1. Les lots requis par les acheteurs ont généralement une taille supérieure au stock d'usine de chaque usine fournisseuse pour satisfaire à lui seul les 3 paramètres des critères de requête. En sorte que ces industries de transformation nécessitent une mutualisation de l'offre de production, pour fournir aux acheteurs des lots combinés de produits provenant d'une multitude d'usines fournisseuses réunies en écosystème industriel de production et de vente.
2. Les trois paramètres de spécifications de requêtes (grade, volumique, et complémentaire) diffèrent et varient dans un large spectre pour chaque acheteur et pour chaque requête.
3. Les besoins et critères des acheteurs, en termes d'optimisation du lot requis, varient également dans un large spectre. Certains acheteurs souhaitent optimiser le paramètre volumique et d'autre le paramètre complémentaire de leur requête d'achat.

Dans le contexte industriel spécifique visé ci-dessus, l'objet de l'invention, et le problème technologique principal que l'invention vise à résoudre, est de fournir un procédé d'optimisation paramétrique multi site universel, pour la constitution mutualisée d'un lot offert à des acheteurs de produits bruts transformé qui permette de manière rapide, économique, homogène et globale :

1. Pour un très grand nombre d'acheteurs d'approvisionner des lots requis qui répondent au large spectre de leurs paramètres de grade, volumique et complémentaires; ainsi qu'à leurs critères d'optimisation, ce en accroissant leur productivité et en permettant un traçage d' origine et de qualité des lots de produits acquis; et,
2. Pour un très grand nombre d'usines fournisseuses, de répondre à grande échelle de manière mutualisée et homogène aux requêtes des acheteurs, tout en améliorant la vitesse de rotation de leur stock, leur productivité, et l'efficacité économique de leurs transactions.

### Technique antérieure

Il est connu par l'art antérieur, que des entreprises ou des usines, transformant des produits industriels bruts similaires, tels des peaux et cuirs, offrent à la vente des produits semi-finis de qualité topologique et géométrie aléatoires au travers d'une plateforme de commerce en ligne. Si l'on se réfère à l'industrie de la tannerie; en 2019 on peut citer les portails Web BtoB suivants :

- Leathermarkets.com https://www.leathermarkets.com
- Alibaba.com https://www.alibaba.com/showroom/leather-raw-material.html
- Indiamart.com https://dir.indiamart.com/delhi/leather-raw-materials.html
- Tradeindia.com https://www.tradeindia.com/Seller/Leather-Leather-Products/Leather-Raw-Materials/
- Go4worldbusiness.com https://www.go4worldbusiness.com/suppliers/raw-leather.html
- Intracen.org http://www.intracen.org/leatherline.

Ces portails Web de l'art antérieur sont des plateformes de commerce en ligne, ou des acheteurs industriels achètent un lot à une usine fournisseuse spécifique choisie sur le site. Mais, selon l'art antérieur, les usines fournisseuses et la plateforme ne coopèrent pas technologiquement en réseau, autour d'une plateforme de commerce, pour offrir automatiquement à un acheteur un lot combiné de grade de qualité homogène, constitués par la combinaison d'une pluralité de sous-lots de produits en provenance d'usines fournisseuses distinctes.

Il est connu par l'art antérieur, de se fixer une norme de qualité topologique d'un type de produits bruts. On peut citer :

- La norme « Principes Directeurs Pour Le Classement Des Peaux et Cuirs D'après La Qualité » émise par l'Organisation des Nations Unies pour le Développement Industriel, sous la référence US/RAF/88/100;
- La norme « Leather - Grading of wet blue goat and sheep skins based on defects » émise par International Standard, sous la référence ISO 11457;
- La norme « Standards Governing the Sale of North American Cattle Hides » adoptée par l'« United States Hide, Skin & Leather Association » en Aout 2014.

Dans la classe C14B de la classification internationale des brevets (IPC), on trouve de nombreux brevets qui décrivent des dispositifs optiques de contrôle automatique par scanner de la qualité de peaux de tannerie, pour assurer dans un usine spécifique la digitalisation et le traitement d'images de produits bruts en cours de transformation dans cette usine; ce afin d' identifier, localiser, et ou classifier des défauts.

Il est connu par l'art antérieur, d'effectuer localement dans une même usine, le contrôle d'un critère topologique d'un flux de produits bruts transformés, et d'affecter localement à ces produits un grade de qualité, en fonction de ces critères topologiques. Ainsi, le brevet US4199255 décrit un dispositif à installer dans une tannerie, pour effectuer le classement de peaux en leur attribuant un grade lié à une norme, en fonction de la répartition de leur épaisseur mesurée de manière automatique à des endroits déterminés.

Il est connu de longue date par l'art antérieur d'installer dans des tanneries des lignes de contrôle pour mesurer certaines caractéristiques physiques ou topologiques des peaux, et permettre de classer les peaux en fonction de leur qualité. Ainsi le brevet EP2835430B1 décrit une ligne de contrôle de production en tannerie comprenant des moyens de déplacement des peaux vers une succession de stations de contrôle manuelles, ou en opérateur attribue visuellement un code de qualité à chacune des peaux. Cette méthode manuelle de contrôle et ses variantes est la plus courante actuellement dans l'industrie de la tannerie.

Il est connu de mettre en œuvre deux unités industrielles distantes en coopération; une usine où l'on scanne les produits et un centre de développement distant ou l'on effectue le traitement d'image des produits. Le brevet WO2017083344A1 décrit un tel dispositif, ou le centre de développement génère en outre des schémas de placement et de découpage de pièces à l'intérieur des produits, et les envoie à l'usine qui est équipée de matériel de découpage. Ce système ne comprend pas de plateforme de commerce et n'effectue pas de mutualisation de production de lots à grade uniforme en provenance d'une pluralité d'usines.

Il est connu de mettre en œuvre un processus informatique de gestion de stock de marchandises combinées pour répondre à des commandes. Ainsi le brevet GB2265032A décrit un programme de gestion des stocks. Il comprend une base de données de marchandises contenant des informations permettant de savoir si chaque produit est destiné à la vente en tant qu'article unique ou en tant que produits combinés comprenant une combinaison d'une pluralité d'articles. Lorsque les marchandises commandées sont des marchandises combinées, le dispositif de traitement vérifie le fichier principal d'inventaire pour déterminer s'il existe un nombre suffisant de marchandises élémentaires en stock pour remplir la quantité de commande. Le dispositif de traitement effectue une affectation du stock et une mise à jour. Ce dispositif ne concerne pas la réalisation de lots de produits bruts normés combinés à partir d'une production de qualité aléatoire provenant d'une multitude d'usines.

Il est connu de mettre en œuvre un processus d'optimisation de la provenance géographique de produits pour répondre à des commandes. Un tel dispositif est décrit dans la demande de brevet US20190180231A1. Ce dispositif ne concerne pas la réalisation de lots de produits normés combinés à partir d'une production de qualité aléatoire provenant d'une multitude d'usines.

Il est connu de mettre en œuvre une plateforme de commerce permettant d'effectuer des transactions en ligne de produits ou de services pour une multitude de requêtes d'acheteurs. Un tel dispositif est décrit dans la demande de brevet US20180260764A1 et concerne des demandes de service de transport ferroviaire. L'interface graphique de la plateforme est configurée pour présenter une pluralité d'options sélectionnables par le client et est adaptée pour fournir des informations supplémentaires au client pour compléter sa transaction en ligne. Ce dispositif ne concerne pas la réalisation de lots de produits normés combinés à partir d'une production de qualité aléatoire provenant d'une multitude d'usines.

**Résumé de l'invention**

Selon l'invention, les lots requis par les acheteurs sont fournis par un écosystème industriel multisite, incluant une multitude d'usines fournisseuses distantes d'une même industrie de transformation, produisant des produits ayant des défauts topologiques et/ou géométriques et une qualité aléatoires.

Les caractéristiques décrites permettent de résoudre le problème technique susmentionné. Dans sa forme essentielle, le procédé de l' invention est du type comprenant les étapes suivantes :

- Selon un processus de fixation de norme, on se fixe une norme de qualité topologique, définissant une échelle de gradation normalisée échelonnée selon plusieurs grades des produits, que l'on transmet et que l'on applique de manière unifiée à toutes les usines de l'écosystème et à tous les acheteurs.
- Selon un processus de gestion de stock usine, implémenté au niveau de chaque usine, on fixe et on enregistre dynamiquement les paramètres de stock de l'usine incluant, en référence à un identifiant de l'usine, la multitude évolutive des identifiants des produits offerts à la vente par l'usine, en fonction des évolutions du stock d'usine disponible.
- Selon un processus numérique programmé de gradation, on détermine dynamiquement le grade de chaque produit offert à la vente par chaque usine.
- Selon un processus de gestion de stock global, on enregistre dynamiquement la multitude évolutive de tous les grades de tous les produits offerts par toutes les usines, en référence à tous les paramètres de stock.
- Selon un processus de gestion des requêtes, on reçoit et on enregistre dynamiquement les requêtes d'achat en provenance d'une multitude d'acheteurs, pour la fourniture de lots requis, devant respecter un ensemble de critères de requête, incluant sous forme d'une expression alphanumérique, au moins un paramètre de grade homogène requis, un paramètre complémentaire, et, un paramètre volumique.
- Selon un processus de sélection conforme, on extrait un sous-ensemble combiné conforme, fait de produits conformes au grade requis, formé par la combinaison d'une multitude de fractions conformes de produits du grade requis, offerts par les différentes usines à partir de leurs stocks d'usine, ce en référence à leurs identifiants de produit et à l'identifiant des usines fournisseuses.

La particularité essentielle et nouvelle du procédé d'optimisation paramétrique multi site selon l'invention réside dans le fait, qu'en outre en combinaison, à la suite d'une requête d'achat d'un acheteur :

- On reçoit en sus de l'acheteur, parmi l'ensemble de ses critères de requête, un critère de choix d'optimisation, incluant un paramètre d' optimisation, par lequel l'acheteur indique son choix : d'une part d'un paramètre numérique de contrainte de l'optimisation requise, et d'autre part d'une dite seconde constante d'optimisation. Ces deux paramètres de choix d'optimisation sont fixés par l'acheteur de manière complémentaire et exclusive parmi soit le paramètre complémentaire soit le paramètre volumique de la requête d'achat.
- On procède à une optimisation paramétrique sous-contrainte par traitement numérique, de la sélection d'un lot offert combiné optimisé selon l'ensemble de critères de requête, sous contrainte du paramètre numérique de contrainte à optimiser choisi par l'acheteur. A cet effet, on sélectionne et on combine une pluralité de sous-fractions conformes, extraites de certaines des fractions conformes du sous-ensemble combiné, réparties optimalement parmi certaines des usines.

Pour ce faire:

- On utilise comme variable d'optimisation, la multitude des n-uplets possibles et variables, constitués chacun d'une collection d'éléments formée d'identifiants de produits variables extraits du sous-ensemble combiné.
- On fixe deux constantes de l'optimisation, une première constante d' optimisation égale au grade requis, et l'autre seconde constante choisie selon le paramètre d'optimisation de l'acheteur.
- On procède à cette optimisation paramétrique, par la maximisation ou la minimisation du paramètre numérique de contrainte choisi selon le paramètre d'optimisation; ce, en faisant varier les n-uplets possibles de la variable d'optimisation, et en déterminant pour chaque n-uplet la valeur atteinte du paramètre numérique de contrainte.

- On fixe par un choix conditionnel dimensionnel, la dimension n des n-uplets variables, dépendant du paramètre de choix d'optimisation.
- On fait une offre à l'acheteur, d'un lot offert combiné optimisé, en lui soumettant en outre l'optimum numérique atteint, solution du paramètre numérique de contrainte optimisé, c'est à dire le minimum ou le maximum atteint par le paramètre numérique de contrainte à optimiser.

## Brève description des dessins

Une lecture de la description détaillée suivante de l'invention se référant également aux dessins qui l'accompagnent, fait apparaître d'autres caractéristiques et avantages de l'invention, selon un mode de réalisation exemplaire. Dans les dessins :

1. [Fig 1] est une vue schématique des moyens mis en œuvre par le procédé et un dispositif selon l'invention, dans leur forme générique.
2. [Fig 2] est un schéma de détail des différentes étapes du processus d' optimisation selon l'invention, dans sa forme générique.
3. [Fig 3] est un schéma de mise en œuvre du procédé et du dispositif selon l'invention, avec gradation opérée au niveau des usines.
4. [Fig 4] est un schéma de mise en œuvre du procédé et du dispositif selon l'invention, avec gradation opérée au niveau d'une plateforme de commerce en ligne.
5. [Fig 5] est une schéma simplifié des étapes du procédé d'optimisation de l'invention et des échanges de fichiers et de données entre la plateforme de commerce, les usines et les acheteurs.
6. [Fig 6] est une vue schématique d'un écran opérateur de gestion de stock d'une tannerie en interaction avec l'écosystème du dispositif de tannerie de l'invention.
7. [Fig 7] est une vue d'une peau en cours de gradation indiquant une zone sensible spécifique.
8. [Fig 8] est un schéma des différentes étapes du processus de tannerie et des différentes transactions de peaux selon l'art antérieur.
9. [Fig 9] est un schéma des différentes étapes du processus de tannerie et du processus de transaction des peaux selon le procédé de l' invention.

## Description des modes de réalisation

Pour une meilleure compréhension de la problématique que vise à résoudre l'invention, en conjonction avec les dessins ci-joints, le contenu technique et la description détaillée de la présente invention sont exposés ci-après selon un mode de réalisation préféré dans l'industrie de la tannerie, qui ne limite pas la portée de son exécution. L'industrie de la tannerie présente tous les paramètres du domaine technologique de l' invention. Les usines transformatrices fournisseuses sont des tanneries. Les produits bruts semi-finis sont des peaux ou des cuirs, transformés en plusieurs étapes. Ces produits bruts sont échangés entre les tanneries à chaque étape primaire. Les cuirs finis sont ultimement achetés et utilisés par des industriels intégrateurs de l'industrie du vêtement, de la chaussure, de l'automobile, ou de l'ameublement et la décoration... Les différentes composantes du problème technologique, et des solutions offertes par l'invention, tels que décrits ci-après en référence à l'industrie de la tannerie, se répliquent de manière similaire, dans toutes les industries de transformation de produits industriels bruts, objets de l' invention, telles que décrites plus haut.

En référence aux figures [Fig 1] et [Fig 2], on voit un dispositif industriel de tannerie (DT) mettant en œuvre le procédé de l'invention, pour l' optimisation de constitution de lots de produits (LO, LOkr) de tanneries homogènes en qualité. En effet, la mise en œuvre du procédé d' optimisation selon l'invention est particulièrement efficace au sein d'un écosystème (E) d'une industrie de transformation (I) produisant des produits industriels bruts similaires à qualité aléatoire, de structure plate en feuille (SF). Cela est le cas dans l'industrie de la tannerie (I), ou les produits sont élaborés et fournis à partir d'une production éparpillée de peaux/cuirs (1, 1ij) à qualité aléatoire, faite par une multitude de tanneries (Fi) fournisseuses distantes réparties sur un large territoire. Les tanneries (Fi) sont reliées par réseau informatique (RL) à une plateforme (CL) de commerce au sein d'un écosystème industriel (E) de l'industrie de tannerie (I). La plateforme (CL) de commerce en ligne assure ainsi l'offre (OF) à la vente à des acheteurs (A, Ak, k) de lots de la production combinée de peaux/cuirs (1, 1ij) des tanneries (Fi), pour satisfaire les requêtes d'achat (RA) des acheteurs (A).

La plateforme (CL) de commerce en ligne sur internet, comprend un serveur informatique de la plateforme (SP), et une base de données d' inventaire de la plateforme (BI) reliée au serveur informatique de la plateforme (SP), regroupant notamment la liste des caractéristiques des peaux/cuirs (1ij) des tanneries, disponibles à la vente sur la plateforme (CL).

La plateforme (CL) comprend des moyens informatiques et logiciels de normalisation (11), du type comprenant notamment un terminal opérateur (12) relié au serveur informatique de la plateforme (SP), pour définir alpha-numériquement, faire évoluer, et enregistrer en mémoire du serveur informatique de la plateforme (SP), une norme (NO) de qualité topologique des produits de tannerie (1) de l'écosystème (E). Cette norme (NO) définit une échelle de gradation (SCA) normalisée échelonnée selon plusieurs grades (G) des produits (1,1ij) de tannerie. Selon cette norme (NO), l' appartenance d'un produit (1) à un grade (G) est fixée par des critères de qualité topologique (CT), basés sur une liste normalisée de types de défauts topologiques (LNT) des produits (1) (peaux et cuirs), objectifs identifiables et mesurables numériquement. Ces défauts sont définis et différenciés par des règles de forme et/ou de taille des défauts, et/ou sur une liste normalisée de zones sensibles (LNZ) des produits (1), objectives et distinguables numériquement. L'empreinte d'une zone (LNZ) sur un produit (1) est définie par des critères géométriques liés à la forme du produit (1), et dans lesquelles peuvent être répartis les défauts topologiques.

La plateforme (CL) comprend des moyens informatiques et logiciels de mise en ligne de la norme (13), du type permettant la mise à disposition des acheteurs (A) et de toutes les tanneries (Fi) de la définition de la norme (NO) uniformisée utilisée par tous l'écosystème (E), via le réseau internet (14).

La plateforme (CL) est dotée de moyens informatiques et logiciels de traitement des requêtes (15), configurés pour recevoir et enregistrer dans la base de données d'inventaire de la plateforme (BI), les requêtes d'achat (RA, RAkr) en provenance d'une multitude d'acheteurs (Ak), pour la fournitures de lots requis (LRkr) de produits de tannerie (1) (peaux et cuirs), ainsi que leurs critères de requête (CR, CRkr) du lot requis (LRkr). Ces critères de requête (CRkr) incluent, sous la forme d'une expression alphanumérique, au moins trois paramètres de spécification, dont le paramètre grade (Gkr) homogène requis pour le lot selon la norme uniforme (NO), un paramètre complémentaire (PCkr) de sélection, et, un paramètre volumique (PVkr).

La plateforme (CL) est équipée de moyens informatiques et logiciels de gestion de stock global (16) des produits de tannerie (1) (peaux et cuirs), reliés au serveur informatique de la plateforme (SP). Ils sont du type permettant de mettre œuvre un processus de gestion de stock global (TGG), afin de réunir et enregistrer dynamiquement la multitude évolutive de tous les grades (∑Gij), et de tous les identifiants (∑Iij) de tous les produits (1ij) offerts sur la plateforme (CL) par chaque tannerie (Fi) dans la base de données d'inventaire (BI) de la plateforme, ce en référence à tous les paramètres de stock (∑PSi) des tanneries (Fi).

L'écosystème industriel (E) comprend également une multitude de tanneries (F1, ..., Fi) distantes. Au moins deux tanneries (Fi) sont distantes entre elles, et distantes de la plateforme (CL).

Tel que cela sera décrit plus loin en référence aux figures [Fig 8] et [Fig 9], les tanneries (Fi) assurent la transformation avec une qualité aléatoire et l' offre à la vente sur la plateforme (CL) de produits de tannerie (1ij), notamment des peaux et cuirs, à l'une des quatre principales étapes de transformation (Sa, ..., Sz) entre les peaux brutes en provenance d' abattoirs et le cuir fini prêt à être utilisé par des acheteurs (A, Ak) industriels intégrateurs. Une multitude de serveurs informatique d'usine (S1, ..., Si) sont associés à chacune des tanneries (Fi) indépendantes. Une multitude de bases de données d'inventaire d'usine (Bi), localisées en mémoire du serveur informatique d'usine (Si), sont associées à chaque tannerie (Fi) indépendante. Des moyens informatiques et logiciels de gestion de stock d'usine (17i), reliés au serveur informatique d'usine (Si) de chaque tannerie (FI), sont configurés pour fixer et enregistrer dynamiquement par un processus de gestion de stock usine (TGFi), les paramètres de stock (PS1, ..., PSi) des tanneries (Fi), en fonction des évolutions de leur stock d'usine (STi) disponible. Ces paramètres de stock (Psi) incluent un identifiant d'usine (Ii), et la multitude évolutive des identifiants des produits (Iij) offerts à la vente par chaque tannerie (Fi). Chaque tannerie (Fi) est équipée de moyens informatiques et logiciels de production d'images primaires (18i) des produits de tannerie (1ij), incluant une multitude de scanners de digitalisation d'image (19i), situé en zone de production de chacune des tanneries (Fi) de l'écosystème (E). Les moyens informatiques et logiciels de production d'images primaires (18i) sont reliés au serveur informatique d'usine (Si), et équipés de moyens pour procéder à l'acquisition automatique optique digitale (TODij) d'un fichier image primaire (FBij) brute par scanning de chacun des produits (1ij) à grader de la tannerie (Fi). Des moyens informatiques et logiciels de stockage d'images primaires (20i) sont configurés pour enregistrer les fichiers image primaire (FBij) des produits (1ij) de chaque tannerie (Fi) de l 'écosystème (E) en mémoire de la base de données d'inventaire d'usine (Bi), en référence aux paramètres de stock (Psi).

Un réseau informatique de liaison numérique (RL), de type internet ou équivalent, relie le serveur informatique de plateforme (SP) à la multitude de serveurs informatique d'usine (S1, ..., Si) de chaque tannerie (Fi) fournisseuse, et les acheteurs (A, Ak) pour constituer un écosystème (E) industriel de tannerie interactif numériquement.

L'écosystème (E) est équipé de moyens informatiques et logiciels de traitement d'image primaire (21), incluant un serveur informatique de traitement de forme (SF) de l'écosystème (E). Ces moyens informatiques et logiciels de traitement d'image primaire (21) sont configurés pour procéder au traitement numérique automatique par reconnaissance de forme (TNFij) des fichiers image primaire (FBij) de chaque produit (1ij) à grader, extrait de la base de données d'inventaire (Bi) de chaque tannerie (Fi). Ils assurent l'identification dans les fichiers image primaire (FBij) des identifiants topologiques (ITij) du type et/ou de la position des défauts topologiques des produits (1ij) à grader, ce, en référence aux critères topologiques de la norme (N0) de qualité topologique.

Des moyens informatiques et logiciels de stockage des fichiers topologiques secondaires (22), sont configurés pour enregistrer les identifiants topologiques (ITij) sous la forme d'un fichier image secondaire (FSij) vectoriel de chaque produit (1ij) à grader et les mémoriser dans une base de données topologique (BF) d'un serveur informatique de traitement de forme (SF) du réseau informatique (RL) de liaison numérique; ce, en référence à l'identifiant de produit (Iij) offert et à l'identifiant d'usine (Ii).

Des moyens informatiques et logiciels de gradation (23), localisés au sein d'un serveur informatique de gradation (SG) de l'écosystème (E), sont configurés pour effectuer dynamiquement, par un processus numérique programmé de gradation (TDGij), la détermination du grade (Gij) de qualité topologique des produits (1ij) offerts à la vente sur la plateforme (CL) par une des usines (Fi), eu égard à la norme (N0); ce à partir du fichier image secondaire (FSij), extrait de la base de données topologique (BF). Ils assurent également la mémorisation des grades (G, Gij) dans une base de données des grades (BG) sur le serveur informatique de gradation (SG); ce, en référence à l'identifiant de produit (1ij) offert et à l' identifiant d'usine (Ii).

Le dispositif de tannerie (DT) comprend des moyens informatiques et logiciels de gestion de stock (24), configurés pour mettre en œuvre dynamiquement le processus d'enregistrement global des grades (TGG), par lequel on mémorise la multitude évolutive des grades (∑Gij) de tous les produits (∑1ij) offerts, en référence aux paramètres de stock (∑PSi) de leurs usines (Fi) dans la base de données d'inventaire (BI) de la plateforme (CL).

Des moyens informatiques et logiciels de filtration par le grade (25) du stock disponible sont configurés pour effectuer un processus de sélection conforme (TSCkr), pour sélectionner un sous-ensemble combiné (SCkr) de produits (1ij) conforme au grade (Gr) requis par la requête d'achat (RAkr) d'un acheteur (Ak), formé par la combinaison d'une multitude de fractions conformes (FC1,..., FCi) de produits (1ij) de grade (G) offerts par les différentes usines (Fi); ce, en référence à leurs identifiants de produit (Iij) et à l'identifiant (Fi) des usines.

En référence combinée aux figures [Fig 1] et [Fig 2], sont décrits les moyens spécifiques du procédé et dispositif d'optimisation selon l' invention, pour résoudre dans sa forme générique le problème technologique évoqué plus haut.

Le dispositif de tannerie (DT) mettant en œuvre le procédé selon l' invention, est équipé de moyens informatiques et logiciels de traitement des requêtes (15) de la plateforme (CL) de commerce, configurés pour recevoir d'un acheteur (A, Ak), en sus et parmi l'ensemble de critères de requête (CR, CRkr) de sa requête (RA, RAkr), un paramètre d'optimisation (PO, POkr). Grâce à ce paramètre d'optimisation (PO), l'acheteur (Ak) indique son choix à le plateforme (CL) :

- du paramètre numérique de contrainte (PN, PNkr) de l'optimisation requise, et,
- d'une dite seconde constante d'optimisation (CS2, CS2kr).

Ces deux paramètres sont pris de manière complémentaire et exclusive parmi soit le paramètre complémentaire (PC, PCkr) ou soit le paramètre volumique (PV, PVkr).

Le serveur de plateforme (SP) de la plateforme (CL) dispose de moyens informatiques et logiciels d'optimisation de lots (26), configurés pour effectuer une optimisation paramétrique (OPC, OPCkr) sous-contrainte, par traitement numérique, de la sélection d'un lot offert (LO, LOkr) combiné optimisé selon l'ensemble de critères de requête (CRkr), sous contrainte du paramètre numérique de contrainte à optimiser (PN). Selon le procédé de l'invention, cette sélection est effectuée en combinant une pluralité de sous-fractions conformes (Si1, ..., Sim), extraites de certaines des fractions conformes (FCi) du sous-ensemble combiné (SCkr), réparties optimalement parmi certaines des tanneries (F1, ...., Fi).

Les moyens informatiques et logiciels d'optimisation de lots (26) sont configurés pour effectuer leur optimisation paramétrique (OPC, OPCkr) :

- en utilisant la variable d'optimisation (VO, VO(x)), constituée par la multitude des n-uplets (N(x)), possibles et variables, constitués chacun d'une collection d'éléments N(x) = (Iijx1, ..., Iijxn)) formée d'identifiants de produits (Iij) variables extraits du sous-ensemble combiné (SCkr);
- en utilisant deux constantes de l'optimisation, une première constante d'optimisation (CS1) égale au grade (G), et l'autre seconde constante (CS2) choisie selon le paramètre d'optimisation (PO);
- en procédant à la maximisation ou la minimisation du paramètre numérique de contrainte (PN) choisi selon le paramètre d'optimisation (PO); ce, en faisant varier les n-uplets (N(x)) possibles de la variable d'optimisation (VO), et en déterminant pour chaque n-uplet la valeur atteinte du paramètre numérique de contrainte (PN); et,
- en fixant par un choix conditionnel dimensionnel (CD, CDkr), la dimension des n-uplets (Nx) variables, dépendant du paramètre de choix d'optimisation (PO).

Les moyens informatiques et logiciels de traitement des requêtes (15) de la plateforme (CL), sont configurés pour faire une offre (OF, OFkr) d'un lot offert (LO, LOkr) combiné optimisé à l'acheteur (A, Ak) issu de l' optimisation paramétrique (OPC), via le réseau internet (14), en lui soumettant en outre l'optimum numérique (OP, OPkr) atteint, solution du paramètre numérique de contrainte optimisé; c'est à dire le minimum ou le maximum atteint par le paramètre numérique (PN) de contrainte à optimiser.

Lors du choix conditionnel dimensionnel (CD, CDkr), de la dimension n des n-uplets (N(x))) variables de la variable d'optimisation (VO), dépendant du paramètre d'optimisation (PO), on procède de la manière suivante :

- Soit la taille (SR, SRkr) du lot requis (LR) est imposée par le paramètre de choix d'optimisation (PO), alors on fixe une dimension de tous les n-uplets (N(x)) (nombre d'éléments des n-uplets) constante et égale à cette taille (SR), et dans ce cas la taille offerte (SO, SOkr) du lot offert (LO) sera la taille requise (SR, SRkr);
- Soit la taille (SR) du lot requis (LR) n'est pas imposée par le paramètre de choix d'optimisation (PO), notamment dans le cas où le respect du paramètre numérique (PN) entraîne une adaptation de la taille du lot offert (SO), alors on choisit la dimension n de chaque n-uplet (N(x)) variable de manière quelconque, jusqu'au nombre des produits du sous-ensemble combiné conforme (SCkr), et dans ce cas la taille du lot offert (SO, SOkr) sera un résultat de l'optimisation paramétrique (OPC).

Le procédé d'optimisation selon l'invention est en mesure de mettre en œuvre toute norme topologique exprimée sous forme numérique et paramétrique, pour être mise en œuvre sous forme d'algorithme par les moyens informatiques et logiciels de gradation (23). Une variante préférée par l'invention de la définition numérique paramétrique d'une norme (NO) de qualité topologique des peaux et cuirs mise en œuvre sur la plateforme (CL) du dispositif de tannerie (DT) est décrite conceptuellement ci-après. Les critères de qualité topologique (CT) conceptuels de la norme (NO) recommandés par l'invention sont les suivants :

1. Soit (H) une peau. Soit (d) = d (T, $S^{min}$, $S^{max}$, $A^{min}$, $A^{max}$, Z, P, P') un critère de défaut de peau ayant une importance non nulle dans son classement de qualité, avec les paramètres nécessaires suivants pour le satisfaire :

    a. T est un type de défaut (e.g., cicatrice, trou, égratignure, etc.).
    b. $S^{min}$ est le minimum de la plus grande dimension du défaut.
    c. Smax est le maximum de la plus grande dimension du défaut.
    d. Amin est la surface minimale du défaut.
    e. Amax est la surface maximale du défaut.
    f. Z est la zone sur laquelle le défaut est positionné (e.g., ventre, dos, croupe, etc.).
    g. P est la position du défaut au sein de la zone sur laquelle il est positionné.
    h. P' est la profondeur du défaut.

2. Soit (c) = c (H, d), le nombre de défauts sur la peau (H) satisfaisant le critère de défaut (d).
3. Soit (g) = g ($t^{min}$, $t^{max}$, $d^{min}$, $c^{min}$, $d^{max}$, $c^{max}$, $a^{min}$, $d^{area}$), un critère global de qualité topologique d'une peau (H), avec les paramètres nécessaires suivant pour le satisfaire :

    a. $t^{min}$ est l'aire totale minimum de la peau (H).
    b. $t^{max}$ est l'aire totale maximum de la peau (H).
    c. $c^{min}$ est le nombre minimum de défaut de la peau (H) satisfaisant le critère $d^{min}$.
    d. $c^{max}$ est le nombre maximum de défaut de la peau (H) satisfaisant le critère $d^{max}$.
    e. $a^{min}$ est l'aire minimum ne contenant pas de défaut $d^{area}$.

4. Soit G (H, g) la valeur d'application du défaut du critère global de qualité topologique (g) sur la peau (H); ou G (H, g) = 1 si la peau (H) satisfait (g); et ou G (H, g) = 0 si la peau (H) ne satisfait (g).
5. Soit (s) = s (H, D, W, G', W'), selon la norme (NO), avec les paramètres suivants :

    a. D= $\{d^1, ..., d^n | n \in N\}$ sont les critères définissant les défauts ayant une importance non nulle dans le classement d'une peau.
    b. (W)= $\{w^1, ..., w^n\}$ sont des poids ou coefficients d'importances fixés par la norme (NO) correspondants aux critères D, ou ($w^i$) est le critère d'importance d'un défaut satisfaisant un critère de défaut ($d^i$).
    c. G'= $\{g^1, ... , g^{n'} | n' \in N\}$ sont les critères globaux ayant une importance non nulle dans le classement d'une peau (H).
    d. W'= $\{w'^1, ..., w'^{n'}\}$ sont les coefficients d'importance correspondants aux critères globaux (G').

Selon une variante préférée de mise en œuvre processus numérique programmé de gradation (TDGij), on fixe la fonction de score (s) de grade d'un peau (H) de la manière suivante :

$$(s) = s\,(H, D, W, G', W') = \sum_{i=1}^{n} wi * G\ (H, di) + \sum_{i=1}^{n'} w'j * G\ (H, gj)$$

Selon une variante préférée de mise en œuvre du procédé de l'invention, on fixe l'échelle de gradation (SCA) de la norme (NO) de la manière suivante :

1. Le grade (g) d'une peau (H, 1ij) est donné par la fonction de classement g :

a. (g) = g (H, D, W, G', W', T') = 1, si s (H, D, W, G', W') < $t^1$
b. (g) = g (H, D, W, G', W', T') = m, si s (H, D, W, G', W') < $t^m$.
c. (g) = g (H, D, W, G', W', T') = m+1, si les conditions ci-dessus ne sont pas respectées.

2. T'= {$t^1$ , ..., $t^m | m \in N$} constitue l'échelle de gradation (SCA) de la norme (NO), ou $t^i$ est la borne supérieure de score pour obtenir un classement de gradation (G) égal à i.

A titre d'exemple, l'invention recommande trois exemples définis ci-après de mise en œuvre de sa norme (NO) paramétrique préférée et du processus de détermination du grade (G) d'une peau (H).

Un premier exemple de mise en œuvre de la norme (NO) paramétrique de gradation de peaux recommandée par l'invention concerne le cas des « Peaux Trouées ». Pour définir la fonction de classement g, on se fixe les critères de défauts et leur poids de la manière suivante : D = {$d^1$} ; ou $d^1$ = (trou, 2mm, 0, 0, 0, 0, 0) et W = {1}; G' = 0; W' = 0; et T'= {1}. Le critère $d^1$ définit un trou de longueur minimale de 2mm. Le poids ou coefficient d'importance associé est 1. Dès lors, la valeur de la fonction de score s augmente de 1 pour chaque défaut de type $d^1$ présent sur H. L'unique seuil de score est 1. Dès lors, toute peau sans trou $d^1$ obtient un classement de 1; et toute peau qui contient un trou $d^1$ ou plus obtient un classement de 2.

Un deuxième exemple de mise en œuvre de la norme (NO) paramétrique de gradation de peaux recommandée par l'invention concerne le cas des « Peaux à défauts ouverts ». Les peaux (H) qui contiennent au plus un défaut ouvert (i.e de profondeur de plus de 5mm) obtiennent le grade (G = 1). Les peaux (H) qui contiennent 2 à 5 défauts ouverts obtiennent le grade (G = 2). Les peaux (H) qui contiennent 6 défauts ouverts ou plus obtiennent le grade (G = 3). Pour définir la fonction de classement G, on se fixe les critères de défauts et leur poids de la manière suivante : D = {$d^1$} ou $d^1$ = (0, 0, 0, 0, 0, 0, situés à plus de 5 cm des bords de la peau, plus de 5 mm); W = {1}; G'= 0; W'= 0; et T'= {2, 6}.

Le troisième exemple de mise en œuvre de la norme (NO) paramétrique de gradation de peaux (H) recommandée par l'invention concerne la forme préférée de mise en œuvre de la norme (NO). Elle permet l' implémentation algorithmique, par le processus numérique programmé de gradation (TDGij) des moyens informatiques et logiciels de gradation (23), des « Standards Governing the Sale of North American Cattle Hides » adoptés par l'« United States Hide, Skin & Leather Association » en Aout 2014. Ce standard de classement comprend 4 grades, de grade 1 (meilleure qualité) à grade 4 (non tannable). Pour définir et implémenter par un processus informatique la fonction de classement G selon l' invention, on se fixe les critères de défauts et leur poids de la manière suivante :

1. D = D = {$d^1$, ..., $d^{14}$}.
2. $d^1$ = (trou, 0, 6 in, 0, 0, 0, situé à plus de 4 in des bords de la peau, 0).
3. $d^2$ = (coupure, 0, 6 in, 0, 0, situé sur la zone au-dessus de la ligne de jarret, 0, 0).
4. $d^3$ = (coupure, 1 in, 6 in, 0, 0, situé sur la zone en-dessous de la ligne de jarret, 0, 0).
5. $d^4$ = (entaille profonde, 0, 0, 0, 0, 0, 0, 0).
6. $d^5$ = (gouge, 0, 0, 0, 0, 0, 0, 0).
7. $g^1$ = (0, 0, 0, 0, 0, 0, la moitié de la surface de la peau, ($d^1$, $d^2$, $d^3$, $d^4$, $d^5$)).
8. $d^6$ = (trou, 0, 6 in, 0, 0, 0, 0, 0).
9. $d^7$ = (coupure, 0, 6 in, 0, 0, $Z^1$, 0, 0).
10. $d^8$ = (entaille profonde, 0, 0, 0, 0, $Z^1$, 0, 0).
11. $d^9$ = (gouge, 0, 0, 0, 0, $Z^1$, 0, 0).
12. $g^2$ = (0, 0, ($d^6$, $d^7$, $d^8$, $d^9$), 1, ($d^6$, $d^7$, $d^8$, $d^9$), 4, 0, 0).
13. $d^{10}$ = (défaut de grain, 0, 0, 1 $ft^2$, 0, 0, 0, 0)
14. $d^{11}$ = (verrue, 0, 0, 1 $ft^2$, 0, 0, 0, 0).
15. $d^{12}$ = (gale non cicatrisée, 0, 0, 1 $ft^2$, 0, 0, 0, 0).
16. $d^{13}$ = (trou, 6 in, 0, 0, 0, 0, 0, 0).
17. $d^{14}$ = (coupure, 6 in, 0, 0, 0, 0, 0, 0).
18. $g^3$ = (0, 0, ($d^6$, $d^7$, $d^8$, $d^9$), 5, 0, 0, 0, 0).
19. W = {0, 0, 0, 0, 0, 0, 0, 0, 0, 5, 50, 50, 50, 50}.
20. G'= {$g^1$, $g^2$, $g^3$}.
21. W'= {1, 5, 50}.
22. T'= {1, 10, 100}.

En référence à la figure [Fig 7], on voit une peau (H) sur laquelle apparaît la zone sensible ($Z^1$). Cette zone ($Z^1$) est située de part et d'autre de la colonne vertébrale (37). Elle est située entre les aisselles inférieures (38) et les aisselles supérieures (39). Selon le critère global $g^1$ pour une peau (H) de grade 1, la zone ($Z^1$) ne doit présenter aucun

défaut de type $d^1$, $d^2$, $d^3$, $d^4$, $d^5$. Selon le critère $g^2$ pour une peau de grade 2, la zone ($Z^1$) peut contenir entre 1 et 4 défauts de type $d^6$, $d^7$, $d^8$, $d^9$ ou $d^{10}$, $d^{11}$, $d^{12}$, $d^{13}$, $d^{14}$. Selon le critère $g^3$ pour une peau (H) de grade 3, la zone (Z1) peut contenir jusqu'à 5 défauts de type $d^6$, $d^7$, $d^8$, $d^9$. Sinon la peau (H) est affectée d'un grade 4 (non tannable).

Le procédé de l'invention s'applique de manière homogène dans la multitude des tanneries (Fi) mutualisées, à une large gamme de critères de requête (CRkr) des acheteurs (Ak), incluant une grande variabilité du paramètre de grade (G, Gkr) homogène requis, du paramètre complémentaire (PC, PCkr), du paramètre volumique (PV, PVkr), et du paramètre d'optimisation paramètre d'optimisation (PO, POkr).

Selon une variante d'adaptation du procédé d'optimisation de l'invention à un premier type de critères de requête (CRkr), on reçoit et on traite au sein de la plateforme (CL) des requêtes d'achat (RA) en provenance d'une multitude d'acheteurs (A), pour la fourniture de lots requis (LR) de produits (1), imposant en outre, par leur ensemble de critères de requête (CR), un paramètre d'étape de transformation (PS, PSkr) des produits (1ij) à fournir dans le lot offert (LO). On extrait par le processus de sélection conforme (TSCkr) un sous-ensemble combiné (SCkr), de produits (1ij) conforme à la fois au grade (Gkr) requis, mais également au paramètre d'étape de transformation (PSkr) requis. On procède à une optimisation paramétrique (OPCkr) sous-contrainte de la sélection d'un lot offert (LOkr) optimal extrait du sous-ensemble combiné (SCkr).

Selon une variante d'adaptation du procédé d'optimisation de l'invention à un second type de critères de requête (CRkr), dans sa requête d'achat (RA) l'acheteur (A) fixe le paramètre complémentaire (PC) de sélection géométrique du lot (LO), comme un paramètre alphanumérique lié à la forme générale des produits (1ij). Le paramètre complémentaire (PC) choisi peut se référer notamment à une particularité géométrique quantifiable liée à la surface du produit (1), telle qu'une surface maximale, une surface minimale, un poids maximal, la conformité de la forme de sa périphérie à un standard de forme, etc. L'acheteur (A) fixe le paramètre d' optimisation (PO), par lequel il indique le paramètre numérique de contrainte à optimiser (PN), comme étant ce critère complémentaire (PC) de sélection géométrique. Dans ce cas, on procède à une optimisation paramétrique (OPC) sous-contrainte, par traitement numérique, de la sélection du lot offert (LO) combiné optimisé, sous la contrainte de maximisation ou de minimisation du critère complémentaire (PC) de sélection géométrique.

Selon une variante d'adaptation du procédé de l'invention à un troisième type de critères de requête (CRkr), on procède à l'optimisation de constitution de lots de produits (1ij), sous contrainte de minimisation du nombre de produits (1ij) permettant le placement d'un nombre minimal de découpe (VP) de pièces (J) à produire à partir du lot requis (LR). Dans sa requête d'achat (RA) l'acheteur (A) fixe le critère complémentaire (PC) de sélection de placement du lot requis (LR), comme étant constitué par le nombre (SR, SRkr) de produits (lij) du lot requis (LR), respectant une capacité de placement et de découpe (CP, CPkr) de pièces (J) à découper dans les produits (1ij) du lot requis (LR), en imposant en outre, qu'à l' intérieur du lot offert (LO), l'on puisse effectuer un nombre minimal de découpes (VP, VPkr) spécifié de pièces (J), selon une taille et une géométrie de pièces (J) prédéfinies. Les pièces (J) doivent éventuellement être placées dans une ou des zones sensibles prédéfinies (Z, $Z^1$) du produit, et/ou comprennent un nombre maximal de défauts de types indiqués. L'acheteur (A) fixe le paramètre volumique (PV) égal à la taille du lot requis (SR, SRkr). L'acheteur (A) fixe le paramètre de choix d' optimisation (PO) (par lequel il choisit le paramètre numérique de contrainte à optimiser (PN)), comme étant égal au paramètre volumique (PV) lui-même égal à la taille du lot requis (SR, SRkr). L'acheteur (A) fixe donc le critère complémentaire (PC) de sélection de placement comme étant la seconde constante (CS2) d'optimisation, en sus de la première constante (CS1) de grade (G). Dans ce cas, on procède à une optimisation paramétrique (OPC) sous-contrainte, par traitement numérique, de la sélection du lot offert (LO) combiné optimisé, en minimisant le paramètre volumique (PN = PV) et donc la taille du lot offert (SO), en respectant la contrainte du critère complémentaire (PC) de capacité de placement et de découpe (CP, CPkr) imposée.

Selon une variante d'adaptation du procédé d'optimisation de l'invention à un quatrième type de critères de requête (CRkr), on procède à l' optimisation de constitution de lots de produits (1ij), sous contrainte de minimisation du nombre d'usines fournisseuses. Dans sa requête d'achat (RA) l'acheteur (A) fixe le critère complémentaire (PC) de sélection du lot requis (LR), comme étant constitué par le nombre d'usines fournisseuses (VF, VFkr) fournissant les produits (1ij) du lot offert (LO). L'acheteur (A) fixe le paramètre volumique (PV) égal à la taille du lot requis (SR). L' acheteur (A) fixe le paramètre de choix d'optimisation (PO) (par lequel il choisit le paramètre numérique de contrainte à optimiser (PN)), comme étant égal au paramètre complémentaire (PC) lui-même égal au nombre d' usines fournisseuses (VF). L'acheteur (A) fixe donc le paramètre volumique (PV) et donc taille du lot requis (SR) comme étant la seconde constante (CS2) d'optimisation, en sus de la première constante (CS1) de grade (G). Dans ce cas, on procède à une optimisation paramétrique (OPC) sous-contrainte, par traitement numérique, de la sélection du lot offert (LO) combiné optimisé, en minimisant le paramètre complémentaire (PN = PC = VF), et donc en minimisant le nombre d'usines fournisseuses (VF), en respectant la contrainte du paramètre volumique (PN = PV) et donc la taille du lot requis (SR).

Selon une variante d'adaptation du procédé d'optimisation de l'invention à un cinquième type de critères de requête (CRkr), on procède à l' optimisation de constitution de lots de produits (1ij), sous contrainte complémentaire de minimisation du de transport. Dans sa requête d'achat (RA) l'acheteur (A) fixe le critère complémentaire (PC) de sélection du lot requis (LR), comme constitué par la somme des distances (VD, VDkr) (et/ou des composantes de coût de transport) entre un lieu de livraison (LL, LLkr) choisi par l'acheteur (A) et l'adresse des différentes usines (Fi) fournissant les produits (1ij) du lot offert (LO). L'acheteur (A) fixe le paramètre volumique (PV) égal à la taille du lot requis (SR). L'acheteur (A) fixe le paramètre de choix d'optimisation (PO) (par lequel il choisit le paramètre numérique de contrainte à optimiser (PN)), comme étant égal au paramètre complémentaire (PC) lui-même égal à la somme des distances (VD) de transport. L'acheteur (A) fixe donc le paramètre volumique (PV) et donc la taille du lot requis (SR) comme étant la seconde constante (CS2) d'optimisation, en sus de la première constante (CS1) de grade (G). Dans ce cas, on procède à une optimisation paramétrique (OPC) sous-contrainte, par traitement numérique, de la sélection du lot offert (LO) combiné optimisé, en minimisant le paramètre complémentaire (PN = PC = VD), soit la somme des distances (VD) de transport du lot (LO), en respectant la contrainte du paramètre volumique (PV = SR) de taille du lot offert (LO).

Selon une variante d'adaptation du procédé d'optimisation de l'invention à un sixième type de critères de requête (CRkr), on procède à l'optimisation de constitution de lots de produits (1ij), sous contrainte complémentaire de maximisation d'usines préférées fournisseuses. On offre à l'acheteur la possibilité d'indiquer sous forme alpha numérique, dans sa requête d' achat (RA) d'un lot requis (LR), une liste préférée (LP, LPkr) d'usines fournisseuses (Fi). Dans sa requête d'achat (RA) l'acheteur (A) fixe le critère complémentaire (PC) de sélection du lot requis (LR), comme constitué par la proportion de provenance (OR, ORkr) des produits (1ij) du lot offert (LO) en provenance d'usines fournisseuses (Fi) incluses dans la liste préférée (LP). L'acheteur (A) fixe le paramètre volumique (PV) égal à la taille du lot requis (SR). L'acheteur (A) fixe le paramètre de choix d' optimisation (PO) (par lequel il choisit le paramètre numérique de contrainte à optimiser (PN)), comme étant égal au paramètre complémentaire (PC) lui-même égal à la proportion de provenance (OR). L'acheteur (A) fixe donc le paramètre volumique (PV) égal à la taille du lot requis (SR) comme étant la seconde constante (CS2) d'optimisation, en sus de la première constante (CS1) de grade (G). Dans ce cas, on procède à une optimisation paramétrique (OPC) sous-contrainte, par traitement numérique, de la sélection du lot offert (LO) combiné optimisé, en maximisant le paramètre complémentaire (PN =PC), soit la proportion de provenance (OR) de produits (1ij) du lot offert (LO) en provenance d' usines fournisseuses (Fi) incluses dans la liste préférée (LP).

Selon une variante d'adaptation du procédé d'optimisation de l'invention à un septième type de critères de requête (CRkr), on procède à l' optimisation de constitution de lots de produits (1ij), sous contrainte complémentaire de respect d'une surface des produits. Dans sa requête d' achat (RA) l'acheteur (A) fixe le critère complémentaire (PC) de sélection du lot requis (LR), comme constitué par la variance de la surface des produits (SFV, SFVkr) par rapport à une surface moyenne (SFM, SFMkr) requise des produits (1ij) du lot requis (LR). L'acheteur (A) fixe le paramètre volumique (PV) égal à la taille du lot requis (SR). L'acheteur (A) fixe le paramètre de choix d'optimisation (PO) (par lequel il choisit le paramètre numérique de contrainte à optimiser (PN)), comme étant égal au paramètre complémentaire (PC) lui-même égal à la variance de la surface des produits (SFV, SFVkr). L'acheteur (A) fixe donc le paramètre volumique (PV) égal à la taille du lot requis (SR) comme étant la seconde constante (CS2) d'optimisation, en sus de la première constante (CS1) de grade (G). Dans ce cas, on procède à une optimisation paramétrique (OPC) sous-contrainte, par traitement numérique, de la sélection du lot offert (LO) combiné optimisé, en minimisant le paramètre complémentaire (PN =PC) de variance de la surface des produits (SFV, SFVkr) par rapport à la surface moyenne (SFM, SFMkr) requise des produits (1ij) du lot offert (LO).

Selon une variante d'adaptation du procédé d'optimisation de l'invention à un huitième type de critères de requête (CRkr), on procède à l'optimisation de constitution de lots de produits (1ij), sous contrainte complémentaire d' une épaisseur des produits. Dans sa requête d'achat (RA) l'acheteur (A) fixe le critère complémentaire (PC) de sélection du lot requis (LR), comme constitué par la variance de l'épaisseur des produits (EPV, EPVkr) par rapport à une épaisseur moyenne (EPM, EPMkr) requise des produits (1ij) du lot requis (LR). L'acheteur (A) fixe le paramètre volumique (PV) égal à la taille du lot requis (SR). L'acheteur (A) fixe le paramètre de choix d' optimisation (PO) (par lequel il choisit le paramètre numérique de contrainte à optimiser (PN)), comme étant égal au paramètre complémentaire (PC) lui-même égal à la variance de l'épaisseur des produits (EPV, EPVkr). L'acheteur (A) fixe donc le paramètre volumique (PV) égal à la taille du lot requis (SR) comme étant la seconde constante (CS2) d'optimisation, en sus de la première constante (CS1) de grade (G). Dans ce cas, on procède à une optimisation paramétrique (OPC) sous-contrainte, par traitement numérique, de la sélection du lot offert (LO) combiné optimisé, en minimisant le paramètre complémentaire (PN =PC) de variance de l'épaisseur des produits (EPV, EPVkr)) par rapport à l' épaisseur moyenne (EPM, EPMkr) requise des produits (1ij) du lot offert (LO).

Dans la forme générale du procédé de l'invention représentée figure [Fig 1] :

1. Au niveau du serveur informatique d'usine (Si) de chaque usine (Fi) qui offre des produits gradés (1ij) via la plateforme (CL) :

    a. on procède dynamiquement dans l'usine (Fi), à l'acquisition automatique optique digitale (TODij) par scanning d'un fichier image primaire (FBij) brute de chacun des produits (1ij) à grader, et,

    b. on enregistre les fichiers image primaire (FBij), en mémoire de la base de données d'inventaire d'usine (Bi);

en référence aux paramètres de stock (Psi).

2. A un endroit quelconque du réseau informatique de liaison numérique (RL) de l'écosystème (E), au sein d'un serveur informatique de traitement de forme (SF) du réseau (RL) de l'écosystème (E) :

a. on procède au traitement numérique automatique par reconnaissance de forme (TNFij) des fichiers image primaire (FBij) de chaque produit (1ij) à grader, extrait de chaque base de données d'inventaire usine (Bi), et à l'identification dans le fichier image primaire (FBij) des identifiants topologiques (ITij) du type et/ou de la position des défauts topologiques des produits (1ij) à grader, ce, en référence aux critères topologiques de la norme (N0) de qualité topologique; et
b. on enregistre ces identifiants topologiques (ITij) sous la forme d'un fichier image secondaire (FSij) vectoriel de chaque produit (1ij) à grader, que l'on mémorise dans une base de données topologique (BF) d'un serveur informatique de traitement de forme (SF) du réseau informatique (RL) de liaison numérique ; ce en référence à l 'identifiant de produit (Iij) offert et à l'identifiant d'usine (Ii).

3. A un endroit quelconque du réseau informatique de liaison numérique (RL) de l'écosystème (E) :

a. on met en œuvre dynamiquement un processus numérique programmé de gradation (TDGij), par lequel on procède au sein d' un des serveurs informatiques de gradation (SG) de l'écosystème (E), à la détermination du grade (Gij) de qualité topologique des produits (1ij) offerts à la vente sur la plateforme (CL) par les usines (Fi), eu égard à la norme (N0), à partir du fichier image secondaire (FSij), extrait de la base de données topologique (BF); et,
b. on mémorise les grades (Gij) de qualité topologique de tous produits (1ij) dans une base de données des grades (BG) sur le serveur informatique de gradation (SG); ce, en référence à l' identifiant de produit (lij) offert et à l'identifiant d'usine (Ii).

4. A un endroit quelconque du réseau informatique de liaison numérique (RL) de l'écosystème (E), on met en œuvre dynamiquement le processus de gestion de stock global (TGG), par lequel on mémorise la multitude évolutive des grades (∑Gij) de tous les produits (∑1ij) offerts, en référence aux paramètres de stock (∑PSi) de leurs usines (Fi), dans une base de données d'inventaire (BI) de la plateforme (CL).

En référence à la figure [Fig 3], on voit une première variante préférée de mise en œuvre du processus gradation au niveau des tanneries (Fi). On voit qu'au sein du dispositif industriel de tannerie (DT), au moins certaines tanneries (Fi) du dispositif (DT) disposent de moyens informatiques et logiciels de gradation en usine (23i). Ceux-ci sont du type configurés pour procéder au niveau du serveur informatique d'usine (Si) au traitement numérique par reconnaissance de forme (TNFij) des fichiers image primaire (FBij) de chaque produit (1ij) à grader, extraits de la base de données d'inventaire d'usine (Bi). Ils assurent la génération dynamique des fichiers image secondaire (FSij) vectoriels des produits (1ij). Ils mettent en œuvre au niveau de l'usine (Fi) un processus numérique programmé de gradation (TDGij), pour la détermination dynamique du grade (Gij) de chaque nouveau produit (1ij) offert par la tannerie (Fi). Ils procèdent à la mémorisation (22i) dans la base de données d'inventaire (Bi) de la tannerie (Fi), des fichiers image secondaire (FSij), et du grade (Gij) de qualité, en référence à l'identifiant de produit (1ij) offert et à l' identifiant d'usine (Ii). Ils effectuent le transfert dynamique et périodique (24i) sous forme numérique, au travers du réseau informatique de liaison numérique (RL), des grades (Gij) des produits gradés offerts à la vente par la tannerie (Fi), de la base de données d'inventaire (Bi) de la tannerie vers les des moyens informatiques et logiciels de gestion de stock (24) de la plateforme (CL). Ils enregistrent dynamiquement la multitude évolutive de tous les grades (∑Gij) de tous les produits (∑1ij) offerts par la tannerie (Fi) dans la base de données d'inventaire (BI) de la plateforme (CL).
En référence à la figure [Fig 4], on voit une seconde variante préférée de mise en œuvre du processus de gradation au niveau de la plateforme (CL). Comme cela était le cas précédemment en référence à la figure [Fig 3], chaque tannerie (Fi) procède au niveau de son serveur informatique d' usine (Si) au traitement numérique par reconnaissance de forme (TNFij) des fichiers image primaire (FBij) de chaque produit (1ij) à grader, extrait de la base de données d'inventaire d'usine (Bi); et assure la génération dynamique des fichiers image secondaire (FSij) vectoriels des produit (1ij). Mais on voit également qu'au sein du dispositif de tannerie (DT), la plateforme (CL) dispose de moyens informatiques et logiciels de gradation (23p). Ceux-ci sont du type configurés pour procéder à un processus numérique programmé de gradation (TDGij), afin de déterminer dynamiquement le grade (Gij) de chaque produit (1ij) offert par chaque usine (Fi). Ils procèdent à la mémorisation dans la base de données d' inventaire (BI) de la plateforme (CL) de tous les fichiers image secondaire (∑FSi), et de tous grade (∑Gij) de qualité de tous les produits (∑1ij) offerts par chaque tannerie (Fi) ; ce en référence à tous leurs identifiants d'usine ( ∑Ii) et leurs identifiants de produit (∑Iij).
En référence aux figures [Fig 1] et [Fig 6], on voit une variante de mise en œuvre du procédé de l'invention, avec mise à jour dynamique des stocks des tanneries. On voit sur la figure [Fig 6], l'écran opérateur de gestion des stocks (27) d'une tannerie (Fi) en interaction avec l'écosystème du dispositif de tannerie (DT). Au travers de l'écran (27), un opérateur de la tannerie (Fi) visualise et/ou enregistre périodiquement de manière dynamique dans la base de données d'inventaire usine (Bi), la liste de stock usine (LGi) incluant la référence (Ii) des produits (1ij) ayant reçu un grade (Gij) de qualité topologique, et les produits vendus et/ou nouvellement gradés. Chaque tannerie (Fi) définit et met à jour périodiquement de manière dynamique dans sa liste de stock usine (LGi), les sous-listes des produits gradés que l'usine (Fi), soit, souhaite mettre en vente (VYij) sur la plateforme (CL), soit, ne souhaite pas mettre en vente (VNij), soit, souhaite retirer de vente (VRij) immédiatement ou à terme. On voit qu'ainsi, les produits (1ij) de la tannerie en vente sur la plateforme (CL) apparaissent de manière grisée sur l'écran (27). Les produits en stock non en vente sur la plateforme (CL) apparaissent de manière non-grisée. Et les produits vendus sont barrés.

De manière complémentaire, selon une variante de l'invention décrite figure [Fig 3], on procède à une synchronisation interactive des offres et des ventes de la plateforme (CL) et des tanneries (Fi) du dispositif de tannerie (DT). Selon cette variante, on procède à une interaction périodique (28), de manière dynamique, et on synchronise au travers du réseau informatique de liaison numérique (RL) de l'écosystème (E), la base de données d'inventaire de la plateforme (BI) avec les bases de données d'inventaire (Bi) de chaque tannerie (Fi), afin de rendre leurs informations homogènes. On maintient à jour périodiquement de manière dynamique dans la base de données d'inventaire de la plateforme (BI), la liste de stock de la plateforme (LG), incluant tous les produits (∑1ij) disponibles (VYij) mis en vente sur la plateforme (CL), en interactivité avec les listes de stock usine (LG1, ..., LGi), ce en référence aux identifiants de produit (∑Iij) et aux identifiants d'usine (∑Ii) des tanneries (Fi). On maintient à jour également périodiquement la liste des ventes (VPij) de produits (1ij, Iij) effectuées pour des lots offerts (LO) achetés par les acheteurs (A) sur la plateforme (CL), la liste des nouveaux produits (VYij) mis en vente par les tanneries (Fi) sur la plateforme (CL), et la liste des produits (VRij) éventuellement retirés de vente sur la plateforme (CL) par les tanneries (Fi).

En référence aux figures [Fig 3] et [Fig 6], on voit une variante de mise en œuvre du procédé de l'invention, avec détermination des conditions de vente par les tanneries (Fi). On voit sur la figure [Fig 6] qu'au travers de l' écran (27), un opérateur de chaque tannerie (Fi) a la possibilité d'indiquer, au travers du réseau informatique de liaison numérique (RL) de l' écosystème (E), et de fixer à la plateforme (CL) de manière interactive, les conditions de mise en vente usine (CVij) des produits gradés (1ij, Iij) offerts. Celles-ci comprennent, pour la tannerie (Fi), le prix de vente offert (KOij) des produits (1ij), et, une durée de mise en vente (Dij) sur la plateforme (CL), définissant une date ultime avant laquelle la tannerie (Fi) s'engage à vendre au travers de la plateforme (CL) et à livrer le produit (1ij) à un acheteur (A) de la plateforme (CL). En référence à la figure [Fig 3], on voit que la tannerie (Fi) transmet périodiquement (29) de manière dynamique, ses conditions de mise en vente usine (CVij) à la plateforme (CL). Au niveau du serveur informatique de la plateforme (SP), on enregistre et on met à jour dynamiquement dans la base de données d' inventaire de la plateforme (BI), les conditions de mise en vente usine (CVij), ce en référence à l'identifiant de produit (Iij) et à l'identifiant d'usine (Ii).

En référence à la figure [Fig 3], on voit une variante de mise en œuvre du procédé de l'invention, avec détermination d'un prix indicatif des produits par la plateforme (CL) de commerce. Au niveau de la plateforme (CL), on détermine de manière dynamique et périodique, une gamme de prix indicatifs suggérés (GP (G, t)), des différents grades (G) du produit (1), évolutive dans le temps (t). Le serveur (SP) de la plateforme (CL) communique (30) la gamme de prix indicatifs suggérés (GP (G, t)) à chaque tannerie (Fi) au travers du réseau informatique de liaison numérique (RL).

On voit en référence à la figure [Fig 3] une première variante de détermination du prix indicatif par la plateforme (CL) par référence à un indicateur dynamique. Le serveur (SP) de la plateforme (CL) fixe un indicateur dynamique de prix de référence (KI(t)) du prix global de marché de l'industrie (I) du produit (1), variable dans le temps (t) en fonction des conditions de marché; ainsi qu'une échelle numérique de valorisation (KE) des différents grades (G) des produits (1ij), par rapport à l'indicateur dynamique de prix de référence (KI(t)). Le serveur (SP) de la plateforme (CL) calcule et enregistre de manière dynamique et périodique dans le temps, la gamme de prix indicatifs suggérés (GP (G, t)) mise à jour du prix des produits (1) de grade (G), de manière corrélée à l'échelle numérique de valorisation (KE) et aux variations temporelles de l'indicateur dynamique de prix de référence (KI(t)).

On voit en référence à la figure [Fig 3] une deuxième variante de détermination du prix indicatif par la plateforme par référence historique. Le serveur informatique de la plateforme (SP), calcule la gamme de prix indicatifs suggérés (GP(G,t)) mise à jour à jour dans le temps (t), de manière corrélée avec l'historique des prix (KHij(G,t)) de ventes (KOij) des transactions de produits (1ij) des différentes tanneries (Fi) passées sur la plateforme (CL) et de leur grade (G), tel qu'enregistré dans la base de données historique des transactions (BH) de la plateforme (CL).

Selon une disposition préférée de l'invention, au niveau du serveur informatique de plateforme (SP), on met à disposition des tanneries (Fi) et/ou des acheteurs (A) les évolutions de la gamme de prix indicatifs suggérés (GP (G, t)), ce au travers du au travers du réseau informatique de liaison numérique (RL).

En référence à la figure [Fig 5] on voit un schéma simplifié des étapes du procédé d'optimisation de l'invention et des échanges de fichiers et de données entre la plateforme (CL) de commerce, les tanneries (Fi) et les acheteurs (Ak) du dispositif de tannerie (DT). Dans la partie gauche de la figure [Fig 5], on voit sur un écran opérateur de gestion des requêtes d'achat (31), relié au serveur (SP) de la plateforme (CL), les différents paramètres d'une requête d'achat (CR, CRkr), et les étapes de traitement (TRAkr) par la plateforme (CL), ainsi que les références des fichiers alphanumériques associés aux paramètres (G, PC, PV, PO). Dans la partie centrale de la figure [Fig 5] on voit les différentes étapes du procédé d'optimisation de l'invention; et notamment le choix (TNO) de la norme (NO), les différents processus d'optimisation (TGFi, TDGij, TRAkr, TSCkr, OPCkr), ainsi que les échanges de fichiers associés apparaissant par des flèches. Chacun de ces processus a été décrit en référence aux figures [Fig 1] à [Fig 4]. Le processus aboutit à l'offre (OF, OFkr) faite à l'acheteur (A, Akr), qui inclut le lot offert (LO, LOkr), sa taille (SO, SOkr), et son optimum atteint (OP, OPkr).

En référence à la figure [Fig 5], on voit que la plateforme de commerce (CL) du dispositif de tannerie (DT), met à disposition d'un acheteur (Ak) un certificat de qualité (CQ) d'un lot offert (LO, LOkr). Préférentiellement il inclue la certification du grade (G) de qualité du lot offert (LO) selon la norme (NO), et/ou une indication de date de fabrication des produits (1ij) du lot par les différentes tanneries (Fi), et/ou une indication d'origine des produits (1ij), telle que la localisation et/ou l'identification des usines (Fi) fournisseuses des sous-fractions (Si1, ...., Sim) des produits (1ij) du lot offert (LO).

Une variante préférée de communication de documents de la plateforme (CL) à un acheteur (Ak) est décrite en référence à la figure [Fig 4]. Selon cette variante, le serveur (SP) de la plateforme (CL) enregistre dans une base de données historique des transactions (BH) sécurisée reliée au réseau (RL) de l'écosystème (E), l'historique des transactions (HTkr) effectuées sur la plateforme de commerce (CL) avec chaque acheteur (Ak) pour chaque lot offert (LOkr), correspondant une requête d'achat (RAkr). Cet historique des transactions (HTkr) inclue les paramètres de transactions (PTkrij) suivant : l'identifiant d'acheteur AIk), la référence de transaction du lot offert (LOkr), et notamment la référence de requête (RAkr), la date de transaction (DAkr), la constitution des produits (∑Iijkr) du lot offert (LOkr), l'identifiant de la provenance des tanneries (Ii) fournissant chaque produit (1ij) du lot, et éventuellement le prix de vente (KOkr) et un certificat de qualité (CQkr) du lot offert (LOkr) acheté.

En référence à la figure [Fig 4], on voit que préférentiellement la plateforme (CL) fixe avec l'acheteur (Ak) un mot de passe acheteur (WAk) préalablement enregistré par la plateforme (CL), grâce à son identifiant d' acheteur (AIk). La plateforme (CL) permet à un acheteur (Ak) de consulter et/ou de télécharger de manière sécurisée et sélective, grâce à son l' identifiant d'acheteur (AIk) et à son mot de passe acheteur (WAk), et via le réseau internet (14) relié à la plateforme (CL), des extraits acheteurs (EAkr) de l'historique des transactions (HTkr) enregistré dans la base historique de ses transactions (BH); ce pour des transactions d'achat de lots offerts (LOkr) par l'acheteur (Ak). La plateforme (CL) filtre les accès de l'acheteur (Ak) à la base historique des transactions (BH), par son identifiant d'acheteur (AIk) et par son mot de passe acheteur (WAk).

En référence à la figure [Fig 4], on voit que préférentiellement la plateforme (CL) fixe, avec chaque tannerie (Fi) de l'écosystème (E), un mot de passe usine (WFi) préalablement enregistré par la plateforme (CL), grâce l'identifiant d'usine (Ii). La plateforme (CL) permet à chaque tannerie (Fi) de consulter et/ou de télécharger de manière sécurisée et sélective, grâce à son identifiant d'usine (Ii) et à son un mot de passe usine (WFi), et via le réseau informatique (RL) de liaison numérique de plateforme (CL), des extraits usine (EFrij) de l'historique des transactions (HTkr) enregistré dans la base de données historique des transactions (BH), ce pour des transactions d'achat de lots offerts (LOkr), constitués de produits (∑Iijkr) en provenance de la tannerie d'identifiant d'usine (Ii). La plateforme (CL) filtre de manière sélective les accès de chaque tannerie (Fi) à la base historique des transactions (BH) pour les produits (1ij) fournis par la tannerie (Fi), par son identifiant d'usine (Ii) et par son mot de passe acheteur (WFi).

Préférentiellement, la plateforme (CL) permet à un acheteur (Ak) d'un lot offert (LOkr), constitué de produits (∑1ijkr), de consulter informatiquement et/ou de télécharger, de manière sécurisée et sélective via le réseau internet (14) et au travers du réseau informatique (RL) de la plateforme de commerce (CL), les fichiers image primaire FBijkr et/ou les fichiers image secondaire FSijkr de l'un des produits (∑1ijkr) du lot offert (LOkr) qu'il a acheté. En outre, préférentiellement la plateforme (CL) fournit à l'acheteur (Ak), et/ou lui permet de télécharger, les fichiers image secondaire (FSijkr) des produits (1ijkr) du lot offert (LOkr) qu'il a acheté, incluant un plan numérique de placement et de découpe (PJijkr) de pièces (J), optimisé selon un paramètre complémentaire de placement (PPkr) fixé par l' acheteur et spécifié dans sa requête (RAkr).

En référence à la figure [Fig 8], on voit les différentes étapes du processus de tannerie (Sa, Sb, Sc, Sd) et des différentes étapes de transaction (Ta, Tb, Tc, Td) classiques des peaux. La durée moyenne de l'ensemble de ces traitements est d'environ quatre semaines.

La première étape (Sa) « Skin » intervient en sortie d'abattoir (40). Les peaux (1Sa) sont alors extrêmement fragiles. Elles sont constituées de 75% de leur poids en eau et se dégradent en quelques heures. Afin de stopper le développement des microbes et bactéries qui causent cette dégradation, on les déshydrate par salage, séchage ou une congélation. La peau (1Sa) est alors dans l'état dit (« Skin »).

La seconde étape (Sb) dite de « travail en rivière » et de « premier-tannage » intervient au niveau d'une multitude de tanneries (F1). Pendant le « travail de rivière », les peaux (1Sb) sont dessalées. Puis elles subissent successivement un trempage pour retirer les souillures et impuretés; un chaulage consistant au retrait chimique des poils; un lavage; un écharnage qui élimine les racines de poils restants; un confitage pour les rendre souples et douces; une acidification pour le retrait de l'eau restante; et enfin un rognage pour l'élimination des bords. Les peaux (1Sb) subissent ensuite un premier tannage permettant de les transformer en cuir durable et souple grâce à des tannins. Les tannins utilisés sont soit végétaux ou organiques, on parle alors de cuirs « White » (WW); soit minéraux tels que des sels de chrome, on parle alors de cuirs « White Blue » (WB); du faits des différences de couleur. On procède ensuite à un essorage; un ajustement d'épaisseur; et un séchage. La peau (1Sb) est alors dans l'état dit (« WB/WW »).

La troisième étape (Sc) dite de « second tannage » consiste en une teinture des peaux (1Sc); un graissage du cuir obtenu; une extraction de l' eau résiduelle; un séchage sous vide; et un lissage du grain. La peau (1Sc) est alors dans l'état dit (« Crust »).

La quatrième étape (Sd) dite de « finition » du cuir consiste en un gaufrage par gravure entre cylindres des peaux (1Sd); un repassage; un essorage; un pressage; un corroyage finissage; un dérayage pour conférer l'épaisseur finale; et une « mise au vent » dans un tambour pour les assouplir. La peau (1Sd) est alors dans l'état dit (« Finished »).

Les peaux (1Sa, 1Sb, Sc, 1Sd), comportent à l'issue des différentes étapes de tannerie (Sa, Sb, Sc, Sd) des défauts topologiques aléatoires, liés à leur histoire, répartis aléatoirement sur la peau (1) :

- des défauts naturels dus à des parasites sur l'animal vivant, tels qu' anthrax, cicatrices, teignes, tumeurs, tiques, poux, varrons, etc.;
- des défauts d'origine mécanique sur l'animal vivant, tels que marques de feu, contusions, éraflures, blessures, égratignures dues à des fils barbelés, etc.;
- des défauts de comportement, tels que terre, crotte, tache d'urine, sable, graines, etc.;
- des défauts de dépouille, tels que coutelures, fleurage, trous, marques de gouge, etc.;
- des défauts dus à la conservation et au stockage, tels que putréfaction, échauffures, taches rouges, piqures de sel, etc.

Chacune des étapes de tannerie (Sa, Sb, Sc, Sd) nécessite des équipements industriels différents. De ce fait, différents type de tanneries (F1, F2, F3, ..., Fi) acquièrent et/ou procèdent en tant qu'acheteurs (Ak) à des transactions (Ta, Tb, Tc) vis à bis d'autres tanneries (Fi) vendeuses pour des peaux (1Sa, 1Sb, 1Sc) à l'issue des trois premières étapes de tannerie (Sa, Sb, Sc). A l'étape finale (Td), les cuirs finis (1Sd) sont ultimement achetés et utilisés par des industriels intégrateurs (Ak, Alk) de l 'industrie du vêtement, de la chaussure, de l'automobile, ou de l' ameublement... L'industriel intégrateur (Alk) procède ensuite à une étape de découpe (Se) des cuirs finis (1Sd) en pièces (J), puis une étape d' assemblage (Sf) des différentes pièces (J) de cuir pour la fabrication de produits industriels finis (41) tels que des sièges d'automobiles, chaussures, produits de maroquinerie...

A l'issue des trois étapes de transformation des tanneries (Sb, Sc, Sd) ainsi que préalablement à l'étape découpe (Se) par l'industriel intégrateur Alk), quatre contrôles (CVb, CVc, CVd, CVe) généralement visuels de la qualité topologique des peaux (1Sa, 1Sb, 1Sc) ont lieu pour une même peau. L'art antérieur ne dispose pas de moyens technologiques pour assurer de manière homogène une gradation automatique de toutes les peaux des tanneries (F1, F2, F3, ..., Fi) selon une norme (NO) homogène qui satisfasse les besoins des différents acheteurs (Ak), tanneries (Fi) et industriels intégrateurs Alk), en termes de paramètre de grade (G) des requêtes (TRA) de transactions (Ta, Tb, Tc) pour des peaux (1Sa, 1Sb, 1Sc). Chaque acteur de la filière, tannerie, industriel intégrateur, a sa propre norme (NO).

De plus, l'art antérieur ne dispose pas de moyens technologiques qui permettent aux tanneries (F1, F2, F3, ...) de répondre de manière uniformisée aux paramètres volumique (PV), paramètre complémentaire (PC), et besoin d'optimisation multiples des requêtes (TRA) de transactions (Ta, Tb, Tc) des acheteurs (Ak), tanneries et industriels intégrateurs, pour des peaux (1Sa, 1Sb, 1Sc).

En sorte que chaque acheteur (Ak) doit à chaque étape de transaction (Ta, Tb, Tc, Td) effectuer une comparaison manuelle des produits des différentes tanneries fournisseuses (Fi) potentielles dont les spécifications sont inhomogènes, par des fichiers Excel (42a, 42b, 42c, 42d) et par des échanges d'Emails (43a, 43b, 43c, 43d) et approvisionner le lot auprès de différentes tanneries. Cela est très coûteux et nuit à la fluidité, à la productivité et au développement de l'industrie des cuirs, ainsi qu'à la rationalité de la fixation des prix.

En référence à la figure [Fig 9], on voit les différentes étapes du processus de tannerie (Sa, Sb, Sc, Sd) et les différentes étapes de transaction (Ta, Tb, Tc, Td) des peaux au sein de l'écosystème (E) du dispositif de tannerie (DT) organisé selon l'invention autour de la plateforme (CL) de commerce en ligne. Chaque tannerie (F1, ..., Fi) est équipée de moyens informatiques et logiciels de production d'images primaires (18b, 18c, 18d). Grâce aux moyens de l'invention décrits plus haut en référence aux figures [Fig 1] à [Fig 5], la multitude évolutive des grades (∑Gij) de tous les produits (∑1ij) offerts à chaque étape de transformation (Sb, SC, Sd) par toutes les tanneries (F1, F2, F3, ...), en référence aux paramètres de stock (∑PSi) de leurs usines (Fi), est dynamiquement mémorisé et mis à jour dans la base de données d'inventaire (BI) du serveur d'inventaire (BI) de la plateforme (CL), selon une norme homogène (NO) unique à la disposition de toutes les tanneries et pour tous les acheteurs de l' écosystème (E). A l'issue de chaque étape de transformation des tanneries (Sb, Sc, Sd), les acheteurs (Ak), tanneries ou industriels intégrateurs, adressent à la plateforme (CL) via le réseau internet (14) leur requêtes d'achat (RAir) et leur ensemble de critères de requête (CRir), incluant leur paramètre de grade (G), leur paramètre volumique (PV), leur paramètre complémentaire (PC) et leur paramètre d'optimisation (PO).

Grâce à la mise en œuvre uniformisée du processus d'optimisation paramétrique (OPC, OPCkr) de l'invention, la plateforme (CL) fournit à chaque acheteur (Ak) et pour chaque requête d'achat (RAkr) une offre (OFkr) respectant l'ensemble de ses critères de requête (CRir) spécifiques, en mutualisant entre les différentes tanneries (Fi) de manière optimisée selon l'ensemble de critères de requête (CRir) la fourniture d'un lot offert (LOkr), et en fournissant un certificat de qualité du lot (CQkr). Selon cette organisation du procédé de l'invention, les transactions (Tb, Tc, Td) à chaque étape de transformation (Sb, Sc, cd) s'effectuent en ligne de manière numérique automatique, sans nécessiter un travail fastidieux de comparaison par l'acheteur (Ak) entre les différentes tanneries (Fi) fournisseuses du type fichier Excel ou Email, et sans mobiliser les tanneries fournisseuses (Fi) lors de la transaction. D'où un gain important de productivité. Les transactions (Tb, Tc, Td) s'opèrent de manière optimale eu égard aux critères de requête (CRir) de l'acheteur, dans des conditions optimale de prix pour les tanneries fournisseuses (Fi) et pour les acheteurs (Ak).

## Application industrielle

L'invention a des applications industrielles dans tous les industries de transformation de produits bruts ayant des défauts topologiques et/ou géométriques et une qualité aléatoires.

L'application industrielle principale de l'invention est l'optimisation paramétrique multi site, pour la constitution de lot offerts combinés optimisés de produits de tanneries, conforme à un ensemble de critères de requêtes d'acheteurs au sein d'un dispositif de tannerie incluant une plateforme de commerce et une multitude de tanneries interconnectées.

L'invention améliore la productivité des usines fournisseuses et des acheteurs, réduit les stocks des usines, accroît la fluidité et la rationalité des prix des transactions. Elle réduit les coûts de production en éliminant les besoins de contrôles visuels. Elle permet un traçage en ligne par les acheteurs de l'historique des produits et des fournisseurs. Elle diminue le taux de défaut des produits bruts et des défauts de qualité des produits finis dans lesquels ils sont intégrés. Elle permet la mise en œuvre d'un processus d'assurance et d'historique de qualité par les industriels intégrateurs, par la délivrance d'un certificat de qualité de chaque lot combiné offert et la mise à disposition en ligne des données de production et de contrôle qualité. L'invention permet une automatisation du contrôle et de la gradation ainsi que des transactions de produits pour une grande volumétrie.

## Revendications

**1.** Procédé de tannerie, pour l'optimisation de constitution de lots offerts (LO, LOkr) de peaux de tanneries (1, 1ij) homogènes en qualité,

a. constitués par la combinaison d'une pluralité de sous-lots,
b. de produits élaborés à partir d'une production éparpillée de peaux/cuirs (1, 1ij) à qualité aléatoire, faite par une multitude de tanneries fournisseuses distantes reliées par réseau informatique (RL) à une plateforme (CL) en ligne sur internet au sein d'un écosystème industriel (E),
c. pour la fourniture de lots requis (LR, LRkr), devant respecter un ensemble de critères (CR, CRkr, CRir) de requête (RA, RAkr), incluant sous forme d'une expression alphanumérique, au moins :

i. un paramètre de grade (G) de qualité topologique, basé sur une norme (NO) de qualité topologique,
ii. un paramètre volumique (PV, PVkr) d'indication de la quantité des peaux (1ij), et,
iii. le choix d'un paramètre de contrainte (PN, PNkr) de l' optimisation requise;

Ce procédé étant du type comprenant les étapes suivantes :

a. Séparément, au niveau de chaque usine (Fi),

i. on procède dynamiquement dans l'usine (Fi) à l'acquisition automatique optique digitale (TODij) par scanning d'un fichier image primaire (FBij) brute de chacune des peaux (1ij) à grader ;

b. A un endroit du réseau informatique de liaison numérique (RL) de l' écosystème (E),

i. On procède au traitement numérique automatique par reconnaissance de forme (TNFij) des fichiers image primaire (FBij) de chaque produit (1ij) à grader, et à l'identification dans le fichier image primaire (FBij) des identifiants topologiques (ITij) du type et/ou de la position des défauts topologiques des produits (1ij) à grader, ce, en référence aux critères topologiques de la norme (N0) de qualité topologique, et,
ii. On enregistre ces identifiants topologiques (ITij) sous la forme d'un fichier image secondaire (FSij) vectoriel de chaque peau (1ij) à grader ;

c. A un endroit du réseau informatique de liaison numérique (RL) de l' écosystème (E), on met en œuvre dynamiquement un processus numérique programmé de gradation (TDGij), par lequel on procède à la détermination du grade (Gij) de qualité topologique des peaux (1ij) offertes par les usines (Fi), eu égard à la norme (N0), à partir du fichier image secondaire (FSij);

Ce procédé étant **caractérisé en ce qu'**en outre en combinaison :

d. Selon un processus de sélection conforme (TSCkr), on extrait un sous-ensemble combiné (SCkr) conforme, fait de peaux (1ij) conformes au grade (G) requis, formé par la combinaison d'une multitude de fractions conformes (FC1,..., FCi) de peaux (1ij) du grade (G) requis, offertes par les différentes tanneries (Fi) à partir de leurs stocks d'usine ;
e. On procède à une optimisation paramétrique (OPC, OPCkr) sous-contrainte de la sélection du lot offert (LOkr) combiné optimisé de peaux (Iij) selon l'ensemble de critères de requête (CRkr), sous contrainte du paramètre numérique de contrainte à optimiser (PN), et pour ce faire,

i. On sélectionne et on combine une pluralité de sous-fractions conformes (Si1, ..., Sim), extraites de certaines des fractions conformes (FCi) du sous-ensemble combiné (SCkr), réparties optimalement parmi certaines des tanneries (F1, ...., Fi),
ii. En procédant à la maximisation ou la minimisation du paramètre numérique de contrainte (PN).

**2.** Procédé de tannerie selon la revendication 1, avec gradation au niveau des tanneries, **caractérisé en ce qu'**en outre, au niveau de chaque tannerie (Fi) qui offre des peaux gradées (1ij):

a. On procède au traitement numérique par reconnaissance de forme (TNFij) des fichiers image primaire (FBij) de chaque peau (1ij) à grader, et on génère dynamiquement les fichiers image secondaire (FSij) vectoriels des peaux (1ij)
b. On procède au traitement numérique de gradation (TDGij), et on détermine dynamiquement le grade (Gij) de chaque nouvelle peau (1ij) offerte.

**3.** Procédé de tannerie selon la revendication 1, avec gradation au niveau de la plateforme (CL), **caractérisé en ce qu'**en outre :

a. Au niveau de chaque usine (Fi) qui offre une peau (1ij),

i. On procède au traitement numérique automatique par reconnaissance de forme (TNFij) des fichiers image primaire (FBij) de chaque peau (1ij) à grader, et on génère dynamiquement les fichiers image secondaire (FSij) vectoriels des peaux (1ij),
ii. On mémorise chaque fichier image secondaire (FSij) ;

b. Au niveau d'un serveur informatique de la plateforme (SP),

i. On effectue le processus numérique programmé de gradation (TDGij), et,
ii. On détermine dynamiquement le grade (Gij) de chaque peau (1ij) offerte par chaque usine (Fi).

**4.** Procédé de tannerie selon la revendication 1, avec mise à jour dynamique des stocks, **caractérisé en ce qu'**en outre, dans chaque usine (Fi) :

a. On enregistre périodiquement de manière dynamique dans une base de données d'inventaire usine (Bi), la liste de stock usine (LGi) incluant la référence (Ii) des peaux (1ij) ayant reçu un grade (Gij) de qualité topologique, et les peaux livrées et/ou nouvellement gradées;
b. On définit et on met à jour périodiquement de manière dynamique dans la liste de stock usine (LGi), les sous-listes des peaux gradés que l'usine (Fi), soit souhaite offrir (VYij) sur la plateforme (CL), soit souhaite retirer (VRij) immédiatement ou à terme.

**5.** Procédé de tannerie selon la revendication 1, avec synchronisation interactive des peaux disponibles, **caractérisé en ce qu'**en outre :

a. On fait interagir périodiquement, de manière dynamique, et on synchronise (28) au travers du réseau informatique de liaison numérique (RL) de l'écosystème (E), une base de données d' inventaire de la plateforme (BI) avec les bases de données d' inventaire (Bi) de chaque usine (Fi), afin de rendre leurs informations homogènes ; et,
b. On maintient à jour périodiquement de manière dynamique dans la base de données d'inventaire de la plateforme (BI),

i. la liste de stock de la plateforme (LG), incluant toutes les peaux (∑1ij) des usines (Fi) disponibles (VYij) sur la plateforme (CL), en interactivité avec les listes de stock usine (LG1, ..., LGi), ce en référence aux identifiants de peau (∑Iij) et aux identifiants d'usine (∑Ii),
ii. la liste des nouvelles peaux (VYij) mises par les usines (Fi) sur la plateforme (CL),
iii. la liste des peaux (VRij) éventuellement retirés de la plateforme (CL) par les usines (Fi).

**6.** Procédé de tannerie selon la revendication 1, implémenté dans l'écosystème (E) de tannerie produisant et offrant la peau (1) en différentes étapes de transformation (Sa, ..., Sz), caractérisé en qu'en outre, en combinaison :

a. On reçoit et on traite des requêtes (RA) en provenance d'une multitude d'industriels (A), pour la fourniture de lots requis (LR) de peaux (1), imposant en outre, par leur ensemble de critères de requête (CR), un paramètre d'étape de transformation (PS, PSkr) des peaux (1ij) à fournir dans le lot offert (LO) ;
b. On extrait par le processus de sélection conforme (TSCkr) un sous-ensemble combiné (SCkr), de peaux (1ij) conforme à la fois au grade (Gkr) requis, mais également au paramètre d'étape de transformation (PSkr) requis ;
c. On procède à une optimisation paramétrique (OPCkr) sous-contrainte de la sélection d'un lot offert (LOkr) optimal de peaux (1ij) extrait du sous-ensemble combiné (SCkr).

**7.** Procédé de tannerie selon la revendication 1, **caractérisé en ce qu'**en outre, selon la requête (RA):

a. On fixe le paramètre numérique de contrainte à optimiser (PN), comme un paramètre complémentaire (PC) alphanumérique de la requête (RA) lié à la forme générale des peaux (1ij), en se référant notamment à une particularité géométrique quantifiable liée à la surface de peau (1), telle qu'une surface maximale, une surface minimale, un poids maximal, la conformité de la forme de sa périphérie à un standard de forme, etc.; et,
b. On procède à une optimisation paramétrique (OPC) sous-contrainte, par traitement numérique, de la sélection du lot offert (LO) combiné optimisé de peaux (1ij), sous la contrainte de maximisation ou de minimisation du critère complémentaire (PC) de sélection géométrique.

**8.** Procédé de tannerie selon la revendication 1, pour l' optimisation de constitution de lots de peaux (1ij), sous contrainte de minimisation du nombre de peaux (1ij) permettant le placement d'un nombre minimal de découpe (VP) de pièces (J) à produire à partir du lot requis (LR), **caractérisé en ce qu'**en outre, selon la requête (RA):

a. On fixe un critère complémentaire (PC) de sélection de placement du lot requis (LR), constitué par le nombre (SR, SRkr) de peaux (Iij) du lot requis (LR), respectant une capacité de placement et de découpe (CP, CPkr) de pièces (J) à découper dans les peaux (1ij) du lot requis (LR), en imposant en outre, qu'à l'intérieur du lot offert (LO), l'on puisse effectuer un nombre minimal de découpes (VP, VPkr) spécifié de pièces (J), selon une taille et une géométrie de pièces (J) prédéfinies, les pièces (J) devant éventuellement être placées dans une ou des zones sensibles prédéfinies de la peau, et/ou comprenant un nombre maximal de défauts de types indiqués ;
b. On fixe le paramètre numérique de contrainte à optimiser (PN), égal au paramètre volumique (PV) lui-même égal à taille du lot requis (SR, SRkr) ;
c. On procède à une optimisation paramétrique (OPC) sous-contrainte de la sélection du lot offert (LO) combiné optimisé, en minimisant le paramètre volumique (PN = PV) et donc la taille du lot offert (SO) de peaux (1ij), en respectant la contrainte du critère complémentaire (PC) de capacité de placement et de découpe (CP, CPkr) imposée.

**9.** Procédé de tannerie selon la revendication 1, avec contrainte de minimisation du nombre d'usines fournisseuses, **caractérisé en ce qu'**en outre, selon la requête (RA):

a. On fixe le paramètre volumique (PV) égal à la taille du lot requis (SR) ;
b. On fixe le paramètre numérique de contrainte à optimiser (PN), égal au nombre d'usines fournisseuses (VF) ; et,
c. On procède à une optimisation paramétrique (OPC) sous-contrainte de la sélection du lot offert (LO) combiné optimisé de peaux (1ij), en minimisant le paramètre complémentaire (PN = VF), et donc en minimisant le nombre d'usines fournisseuses (VF), en respectant la contrainte du paramètre volumique (PV) et donc la taille du lot requis (SR).

**10.** Procédé de tannerie la revendication 1, sous contrainte complémentaire de minimisation du transport, **caractérisé en ce qu'**en outre, selon la requête (RA):

a. On fixe le paramètre volumique (PV) égal à la taille du lot requis (SR) ;
b. On fixe le paramètre numérique de contrainte à optimiser (PN), égal à la somme des distances (VD, VDkr) (et/ou des composantes de coût de transport) entre un lieu de livraison (LL, LLkr) choisi et l' adresse des différentes usines (Fi) fournissant les peaux (1ij) du lot offert (LO);
c. On procède à une optimisation paramétrique (OPC) sous-contrainte, par traitement numérique, de la sélection du lot offert (LO) combiné optimisé de peaux (1ij), en minimisant le paramètre complémentaire (PN = VD), soit la somme des distances (VD) de transport du lot (LO), en respectant la contrainte du paramètre volumique (PV = SR) de taille du lot offert (LO).

**11.** Procédé de tannerie selon la revendication 1, sous contrainte complémentaire de maximisation d'usines préférées fournisseuses, **caractérisé en ce qu'**en outre, selon la requête (RA):

a. On fixe le paramètre volumique (PV) égal à la taille du lot requis (SR) ;
b. On fixe le paramètre numérique de contrainte à optimiser (PN)), égal à la proportion de provenance (OR, ORkr) des peaux (1ij) du lot offert (LO) en provenance d'usines fournisseuses (Fi) incluses dans une liste préférée (LP, LPkr) d'usines fournisseuses (Fi) ;
c. On procède à une optimisation paramétrique (OPC) sous-contrainte, de la sélection du lot offert (LO) combiné optimisé de peaux (1ij), en maximisant le paramètre complémentaire (PN =PC), soit par la proportion de provenance (OR) de peaux (1ij) du lot offert (LO) en provenance d'usines fournisseuses (Fi) incluses dans la liste préférée (LP).

**12.** Procédé de tannerie selon la revendication 1, sous contrainte de respect d'une surface des peaux, **caractérisé en ce qu'**en outre, selon la requête (RA):

a. On fixe le paramètre volumique (PV) égal à la taille du lot requis (SR) ;
b. On fixe le paramètre numérique de contrainte à optimiser (PN), égal à la variance de la surface des peaux (SFV, SFVkr) ;
c. On procède à une optimisation paramétrique (OPC) sous-contrainte de la sélection du lot offert (LO) combiné optimisé de peaux (1ij), en minimisant le paramètre complémentaire (PN) de variance de la surface des peaux (SFV, SFVkr)) par rapport à la surface moyenne (SFM, SFMkr) requise des peaux (1ij) du lot offert (LO).

**13.** Procédé de tannerie selon la revendication 1, sous contrainte de respect d'une épaisseur des peaux, **caractérisé en ce qu'**en outre, selon la requête (RA):

a. On fixe le paramètre volumique (PV) égal à la taille du lot requis (SR) ;
b. On fixe paramètre numérique de contrainte à optimiser (PN)), comme constitué par la variance de l'épaisseur des peaux (EPV, EPVkr) par rapport à une épaisseur moyenne (EPM, EPMkr) requise des peaux (1ij) du lot requis (LR),
c. On procède à une optimisation paramétrique (OPC) sous-contrainte, de la sélection du lot offert (LO) combiné optimisé de peaux (1ij), en minimisant le paramètre complémentaire (PN) de variance de l' épaisseur des peaux (EPV, EPVkr)) par rapport à l'épaisseur moyenne (EPM, EPMkr) requise des peaux (1ij) du lot offert (LO).

**14.** Dispositif industriel de tannerie (DT), mettant en œuvre le procédé de la revendication 1, pour l'optimisation de constitution de lots offerts (LO, LOkr) de peaux de tanneries (1, 1ij) homogènes en qualité,

a. constitués par la combinaison d'une pluralité de sous-lots,
b. de produits élaborés à partir d'une production éparpillée de peaux/cuirs (1, 1ij) à qualité aléatoire, faite par une multitude de tanneries fournisseuses (Fi) distantes reliées par réseau informatique (RL) à une plateforme (CL) en ligne sur internet au sein d'un écosystème industriel (E),
c. pour la fourniture de lots requis (LR, LRkr), devant respecter un ensemble de critères (CR, CRkr, CRir) de requête (RA, RAkr), incluant sous forme d'une expression alphanumérique, au moins :

i. un paramètre de grade (G) de qualité topologique, basé sur une norme (NO) de qualité topologique ;
ii. un paramètre volumique (PV, PVkr) d'indication de la quantité des peaux (1ij), et,
iii. le choix d'un paramètre de contrainte (PN, PNkr) de l' optimisation requise ;

Ce dispositif (DT) étant du type constitué par la combinaison entre :

a. Une plateforme (CL) en ligne sur internet ;
b. Une multitude de tanneries (F1, ..., Fi) distantes comprenant :

i. au moins deux tanneries distantes entre elles, et distantes de la plateforme (CL), assurant la transformation avec une qualité aléatoire et l'offre sur la plateforme (CL) de peaux de tannerie (1ij), à l'une des quatre principales étapes de transformation (Sa, ..., Sz) entre les peaux brutes en provenance d'abattoirs et le cuir fini prêt à être utilisé par des industriels (A,Ak) intégrateurs,
ii. des moyens de production d'images primaires (18i) des peaux de tannerie (1ij), incluant une multitude de scanners de digitalisation d'image (19i), situés en zone de production de chacune des tanneries (Fi) de l'écosystème (E), équipés de moyens pour procéder à l'acquisition automatique optique digitale (TODij) d'un fichier image primaire (FBij) brute par scanning de chacun des peaux (1ij) à grader de la tannerie (Fi) ;

c. Des moyens de traitement d'image primaire (21), incluant un serveur informatique de traitement de forme (SF) de l'écosystème (E), configurés pour procéder :

i. au traitement numérique automatique par reconnaissance de forme (TNFij) des fichiers image primaire (FBij) de chaque peau(1ij) à grader, de chaque tannerie (Fi),
ii. et à l'identification dans le fichier image primaire (FBij) des identifiants topologiques (ITij) du type et/ou de la position des défauts topologiques des peaux (1ij) à grader,
iii. ce, en référence aux critères topologiques de la norme (N0) de qualité topologique,
iv. sous la forme d'un fichier image secondaire (FSij) vectoriel de chaque produit (1ij) à grader ;

d. Des moyens de gradation (23), localisés au sein d'un serveur informatique de gradation (SG) de l'écosystème (E), configurés pour i. effectuer dynamiquement, par un processus numérique programmé de gradation (TDGij), la détermination du grade (Gij) de qualité topologique des peaux (1ij) offertes sur la plateforme (CL) par une des usines (Fi), eu égard à la norme (N0), ce à partir du fichier image secondaire (FSij) ;

Ce dispositif (DT) étant **caractérisé en ce qu'**en outre en combinaison, il comporte:

e. Des moyens de filtration par le grade du stock disponible (25), configurés pour effectuer un processus de sélection conforme (TSCkr),

i. pour sélectionner un sous-ensemble combiné (SCkr), de peaux (1ij) conformes au grade (Gr) requis par une requête (RAkr),
ii. formé par la combinaison d'une multitude de fractions conformes (FC1,..., FCi) de peaux (1ij) de grade (G) offerts par les différentes usines (Fi), ce, en référence à leurs identifiants de peau (Iij) et à l'identifiant (Fi) des usines;

f. Des moyens d'optimisation de lots (26), configurés pour effectuer une optimisation paramétrique (OPC, OPCkr) sous-contrainte, par traitement numérique, de la sélection d'un lot offert (LOkr) combiné optimisé selon l'ensemble de critères de requête (CRkr), sous contrainte du paramètre numérique de contrainte à optimiser (PN), ce,

i. en sélectionnant et en combinant une pluralité de sous-fractions conformes (SFi1, ..., SFim), extraites de certaines des fractions conformes (FCi) du sous-ensemble combiné (SCkr), réparties optimalement parmi certaines des tanneries (F1, ...., Fi),
ii. en procédant à la maximisation ou la minimisation du paramètre numérique de contrainte (PN).

**15.** Dispositif industriel de tannerie (DT) selon la revendication 14, avec mise en œuvre du processus gradation au niveau des tanneries (Fi), **caractérisé en ce qu'**en outre, au moins certaines tanneries (Fi) du dispositif (DT) disposent de moyens de gradation en usine (23i), du type qui :

a. procèdent au traitement numérique par reconnaissance de forme (TNFij) des fichiers image primaire (FBij) de chaque peaux (1ij) à grader ;
b. assurent la génération dynamique des fichier image secondaire (FSij) vectoriel des peaux (1ij);
c. mettent en œuvre au niveau de l'usine (Fi) un processus numérique programmé de gradation (TDGij), pour la détermination dynamique du grade (Gij) de chaque nouvelle peau (1ij) offerte par la tannerie (Fi); et,
d. effectuent le transfert dynamique et périodique (24i) sous forme numérique, au travers du réseau informatique de liaison numérique (RL), des grades (Gij) des produits gradés offerts par la tannerie (Fi), de la tannerie vers des moyens de gestion de stock (24) de la plateforme (CL).

**16.** Dispositif industriel de tannerie (DT) selon la revendication 14, avec mise en œuvre du processus de gradation au niveau de la plateforme (CL), caractérisé en ce la plateforme (CL) dispose de moyens de gradation (23p) :

a. configurés pour procéder à un processus de gradation (TDGij) afin de déterminer dynamiquement le grade (Gij) de chaque produit (1ij) offert par chaque usine (Fi) ;et,
b. qui procèdent à la mémorisation dans une base de données d ' inventaire (BI) de la plateforme de tous fichiers image secondaire (∑ FSi), et de tous grade (∑GSij) de qualité de tous les peaux(∑1ij) offertes par chaque tannerie (Fi) en référence à tous leurs identifiants d'usine (∑Ii) et leurs identifiants de peau (∑Iij).

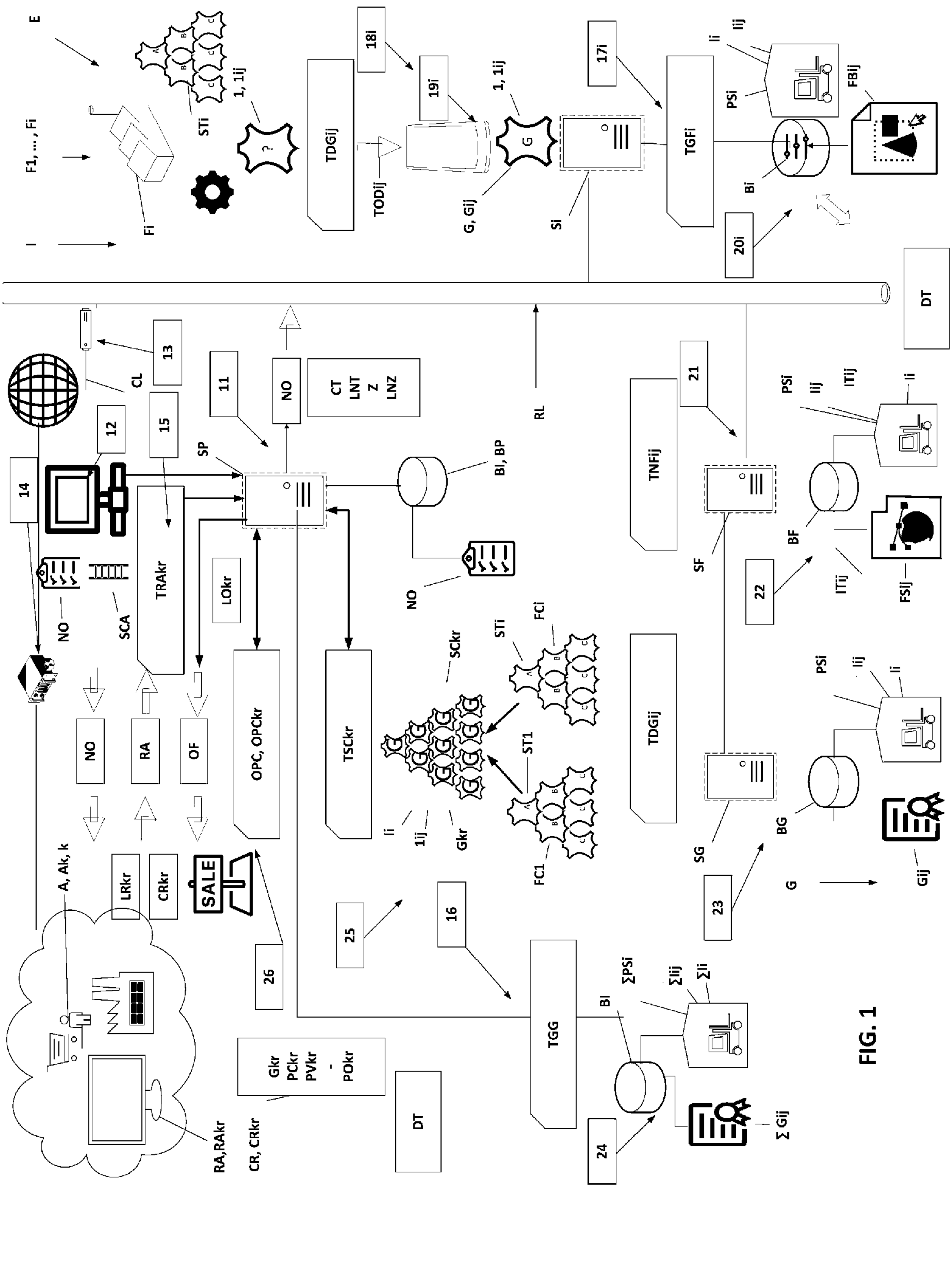
E
F1, ... , Fi
Fi
I
STi
1, 1ij
TDGij
TODij
18i
19i
G
G, Gij
Si
17i
TGFi
PSi
Ii
Iij
FBij
Bi
20i
DT
13
CL
12
14
15
11
NO
CT
LNT
Z
LNZ
RL
SP
BI, BP
TRAkr
LOkr
SCA
RA
OF
OPC, OPCkr
TSCkr
TNFij
21
SF
BF
22
ITij
FSij
SCkr
FCi
ST1
FC1
Gkr
TDGij
SG
BG
23
Gij
A, Ak, k
LRkr
CRkr
SALE
26
25
16
TGG
ΣPSi
ΣIij
ΣIi
Gkr
PCkr
PVkr
POkr
CR, CRkr
RA,RAkr
24
Σ Gij

FIG. 1

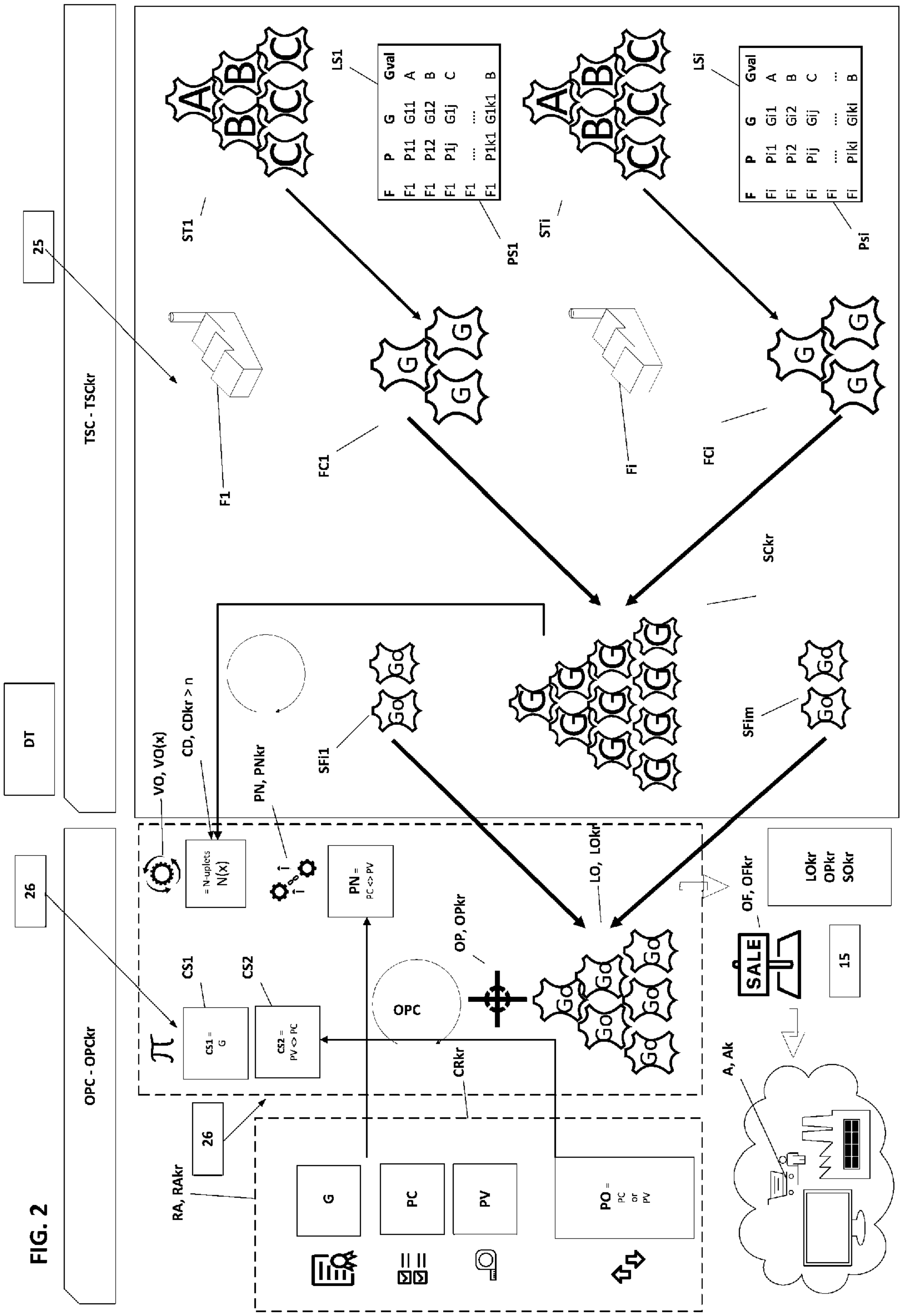

TSC - TSCkr
OPC - OPCkr
DT
25
26
26
15
ST1
STi
LS1
LSi
PS1
Psi
F1
Fi
FC1
FCi
SCkr
SFi1
SFim
VO, VO(x)
CD, CDkr > n
PN, PNkr
CS1
CS2
CS1 = G
CS2 = PV <> PC
= N-uplets N(x)
PN = PC <> PV
OPC
OP, OPkr
LO, LOkr
CRkr
RA, RAkr
G
PC
PV
PO = PC or PV
OF, OFkr
LOkr
OPkr
SOkr
SALE
A, Ak


FIG. 2

FIG. 3

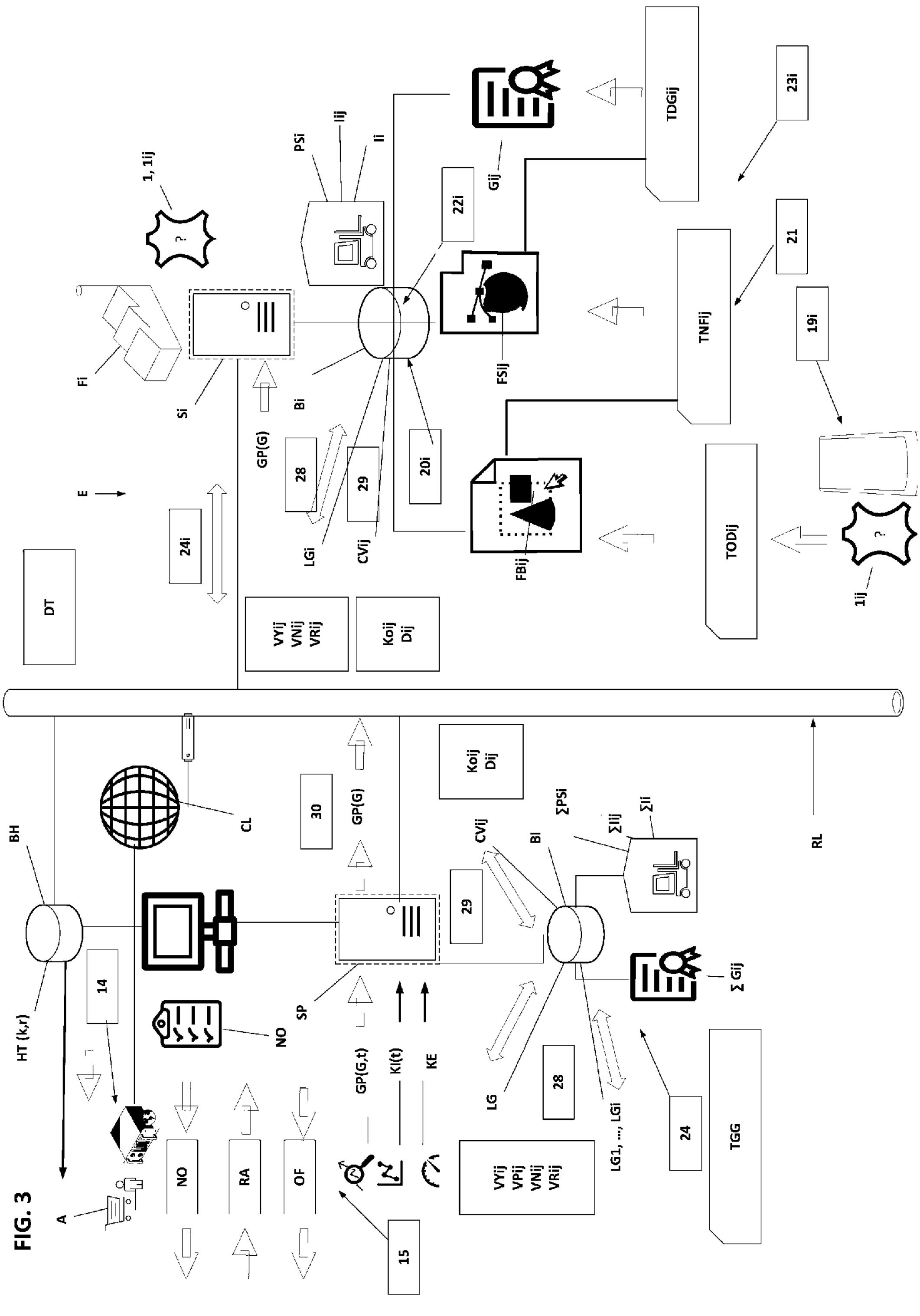
1, 1ij
PSi
Iij
Ii
Fi
Si
Bi
22i
Gij
TDGij
23i
FSij
TNFij
21
19i
GP(G)
28
29
20i
LGi
CVij
FBij
TODij
1ij
E
24i
DT
VYij
VNij
VRij
Koij
Dij
RL
BH
CL
30
ΣPSi
ΣIij
ΣIi
BI
HT (k,r)
14
SP
NO
Σ Gij
GP(G,t)
KI(t)
KE
LG
LG1, ..., LGi
24
TGG
A
RA
OF
15
VPij

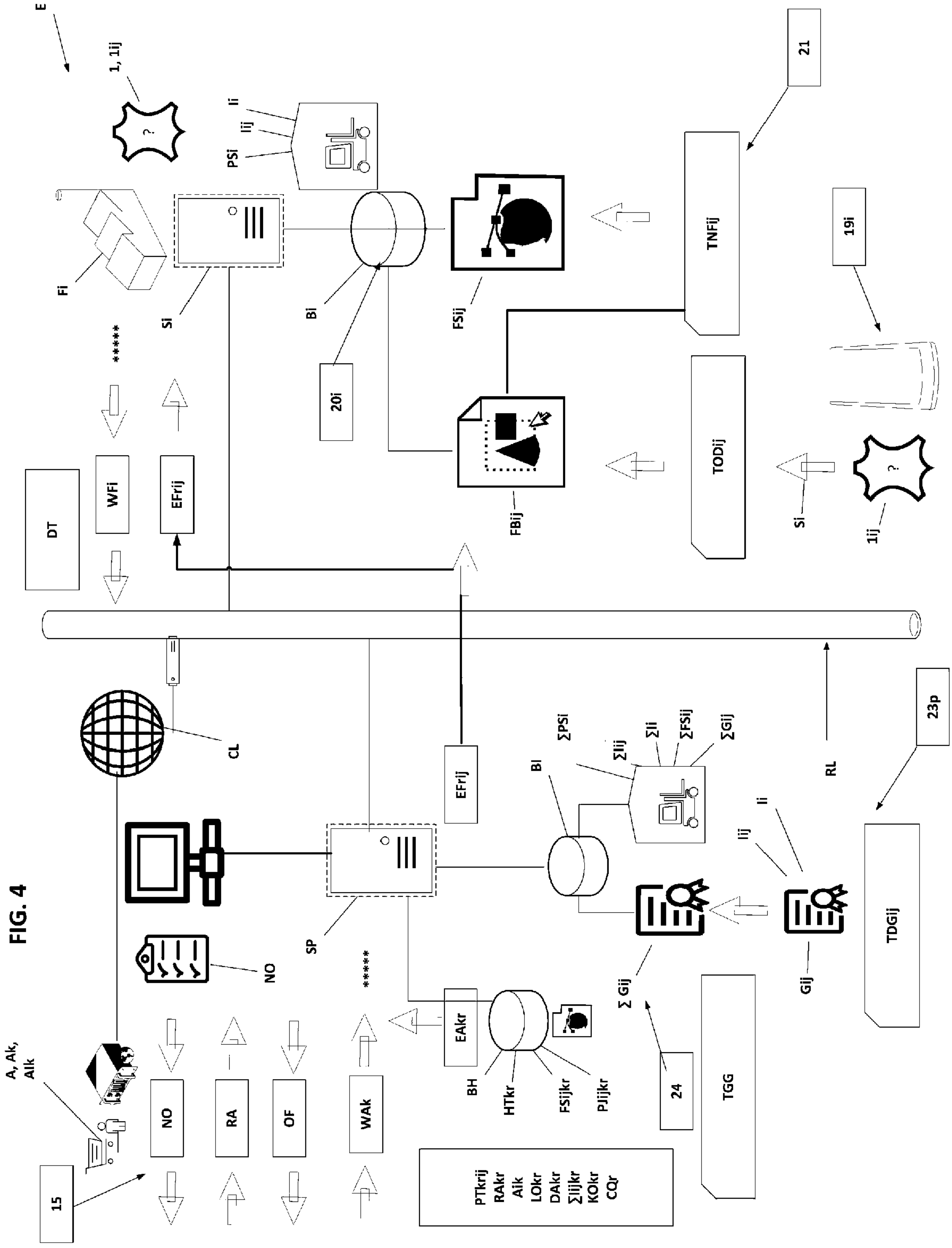
E
1, 1ij
Fi
Si
PSi
Iij
Ii
Bi
20i
FSij
21
TNFij
19i
TODij
FBij
Si
1ij
*****
WFi
EFrij
DT
CL
EFrij
RL
23p
TDGij
Gij
Iij
Ii
BI
ΣPSi
ΣIij
ΣIi
ΣFSij
ΣGij
SP
NO
*****
EAkr
BH
HTkr
FSijkr
PJijkr
24
Σ Gij
TGG
A, Ak,
AIk
15
NO
RA
OF
WAk
PTkrij
RAkr
AIk
LOkr
DAkr
ΣIijkr
KOkr
CQr

FIG. 4

FIG. 5

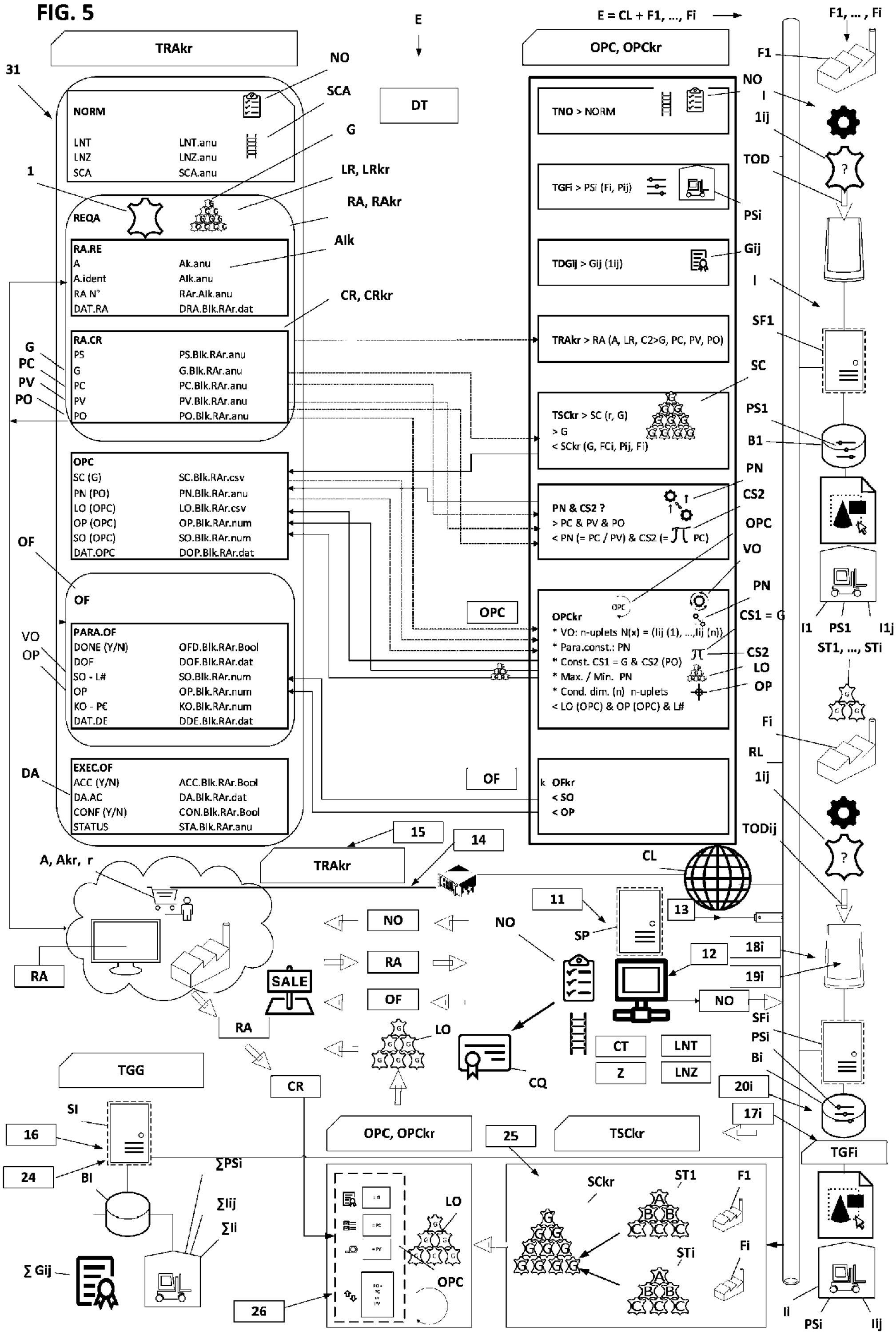
TRAkr
31
NORM
LNT LNT.anu
LNZ LNZ.anu
SCA SCA.anu
NO
SCA
G
LR, LRkr
RA, RAkr
Alk
CR, CRkr
1
REQA
RA.RE
A Ak.anu
A.ident Alk.anu
RA N° RAr.Alk.anu
DAT.RA DRA.Blk.RAr.dat
RA.CR
PS PS.Blk.RAr.anu
G G.Blk.RAr.anu
PC PC.Blk.RAr.anu
PV PV.Blk.RAr.anu
PO PO.Blk.RAr.anu
OPC
SC (G) SC.Blk.RAr.csv
PN (PO) PN.Blk.RAr.anu
LO (OPC) LO.Blk.RAr.csv
OP (OPC) OP.Blk.RAr.num
SO (OPC) SO.Blk.RAr.num
DAT.OPC DOP.Blk.RAr.dat
OF
PARA.OF
DONE (Y/N) OFD.Blk.RAr.Bool
DOF DOF.Blk.RAr.dat
SO - L# SO.Blk.RAr.num
OP OP.Blk.RAr.num
KO - PC KO.Blk.RAr.num
DAT.DE DDE.Blk.RAr.dat
EXEC.OF
ACC (Y/N) ACC.Blk.RAr.Bool
DA.AC DA.Blk.RAr.dat
CONF (Y/N) CON.Blk.RAr.Bool
STATUS STA.Blk.RAr.anu
E
DT
E = CL + F1, ..., Fi
OPC, OPCkr
TNO > NORM
TGFi > PSi (Fi, Pij)
TDGij > Gij (1ij)
TRAkr > RA (A, LR, C2>G, PC, PV, PO)
TSCkr > SC (r, G)
> G
< SCkr (G, FCi, Pij, Fi)
PN & CS2 ?
> PC & PV & PO
< PN (= PC / PV) & CS2 (= ∏ PC)
OPC
OPCkr
* VO: n-uplets N(x) = (Iij (1), ..., Iij (n))
* Para.const.: PN
* Const. CS1 = G & CS2 (PO)
* Max. / Min. PN
* Cond. dim. (n) n-uplets
< LO (OPC) & OP (OPC) & L#
OF
k OFkr
< SO
< OP
F1, ..., Fi
F1
NO
I
1ij
TOD
PSi
Gij
I
SF1
SC
PS1
B1
PN
CS2
OPC
VO
PN
CS1 = G
CS2
LO
OP
I1 PS1 I1j
ST1, ..., STi
Fi
RL
1ij
TODij
CL
15
14
TRAkr
A, Akr, r
RA
11
13
SP
12
18i
19i
NO
NO
RA
OF
SALE
RA
LO
CQ
CT
LNT
Z
LNZ
SFi
PSI
Bi
20i
17i
TGFi
CR
TGG
SI
16
24
BI
∑PSi
∑Iij
∑Ii
∑ Gij
OPC, OPCkr
25
TSCkr
SCkr
ST1
F1
STi
Fi
LO
OPC
26
Il
PSi
Iij

**FIG. 6**

LGi Gij 27 VYij VNij Dij VRij KOij

| Fi | Prod. | Date.Prod | Date.Grade | Date.Sold | Grade | Plat. | Date.Until | Ren. | PO€ | PS€ |
|---|---|---|---|---|---|---|---|---|---|---|
| Inventory | 1i1 | 06/01/2019 | 13/01/2019 | | Gi1 | Y | 28/01/2019 | Y | POi1 | |
| | 1i2 | 07/01/2019 | 14/01/2019 | | Gi2 | Y | 29/01/2019 | N | POi2 | |
| | 1i3 | 08/01/2019 | 15/01/2019 | | Gi3 | N | | | | |
| | ~~1i4~~ | ~~08/01/2019~~ | ~~15/01/2019~~ | ~~17/01/2019~~ | ~~Gi4~~ | x | x | x | x | PSi4 |
| | ~~1i5~~ | ~~10/01/2019~~ | ~~17/01/2019~~ | ~~18/01/2019~~ | ~~Gi6~~ | x | x | x | x | PSi5 |
| | ........ | ........ | ........ | | ........ | ... | ... | ... | ... | ... |
| | 1ini | 13/08/2019 | 20/08/2019 | | Gini | N | 04/09/2019 | Y | POini | |

CVij

**FIG. 7**

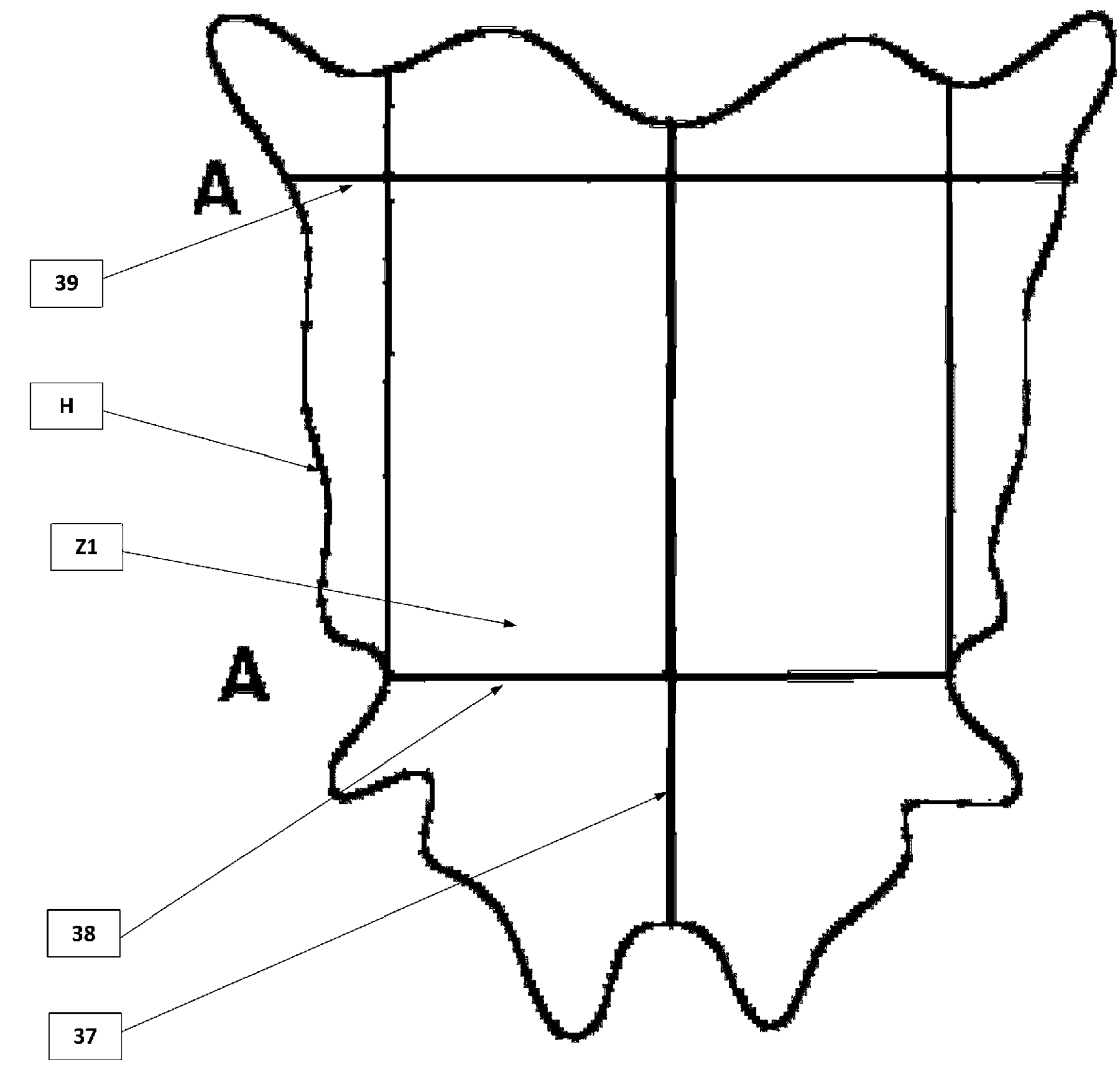

FIG. 8

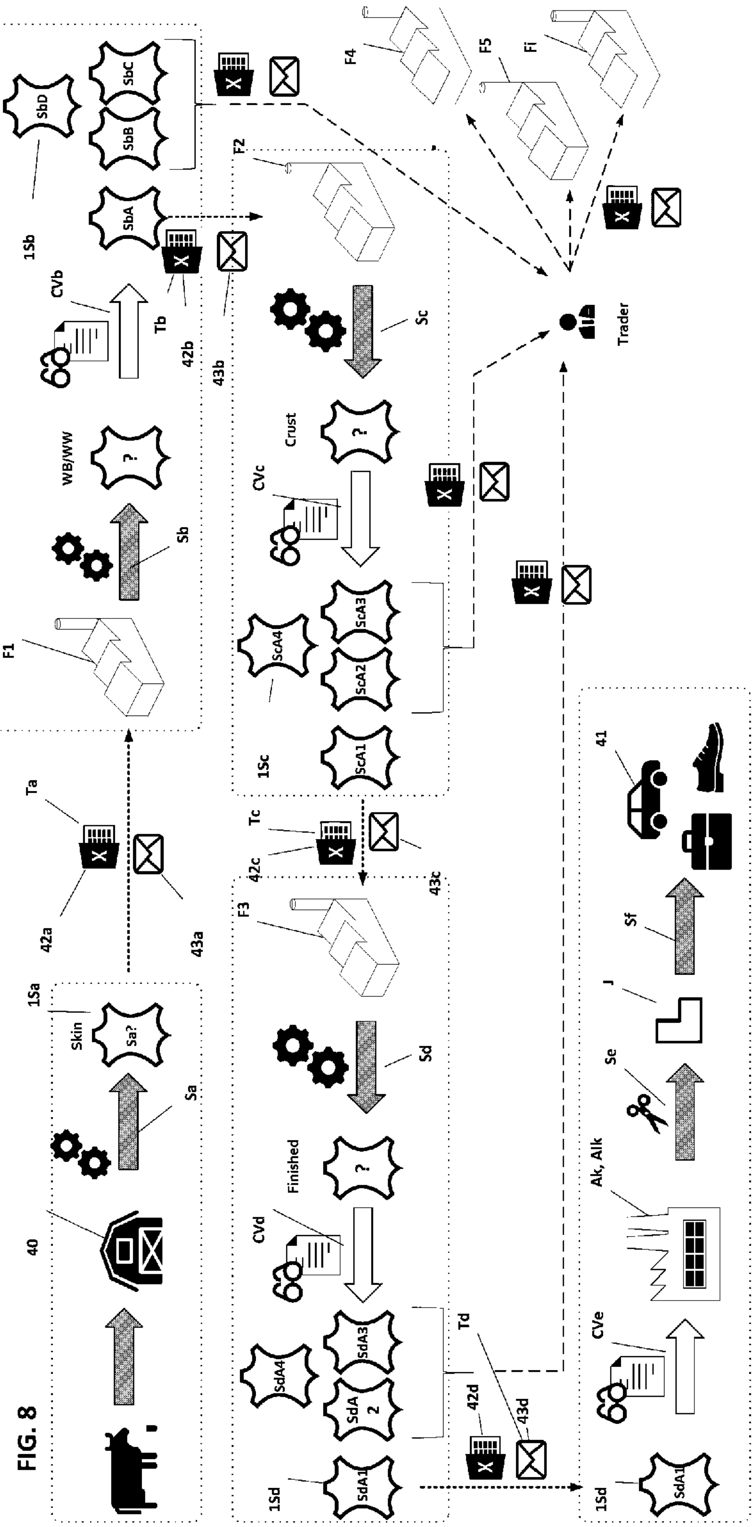
40
Sa
Skin
Sa?
1Sa
Ta
42a
43a
F1
Sb
WB/WW
?
CVb
Tb
42b
43b
1Sb
SbA
SbB
SbC
SbD
F2
Sc
Crust
CVc
ScA1
ScA2
ScA3
ScA4
1Sc
Tc
42c
43c
F3
Sd
Finished
CVd
SdA1
SdA 2
SdA3
SdA4
1Sd
Td
42d
43d
Trader
F4
F5
Fi
CVe
Ak, Alk
Se
J
Sf
41

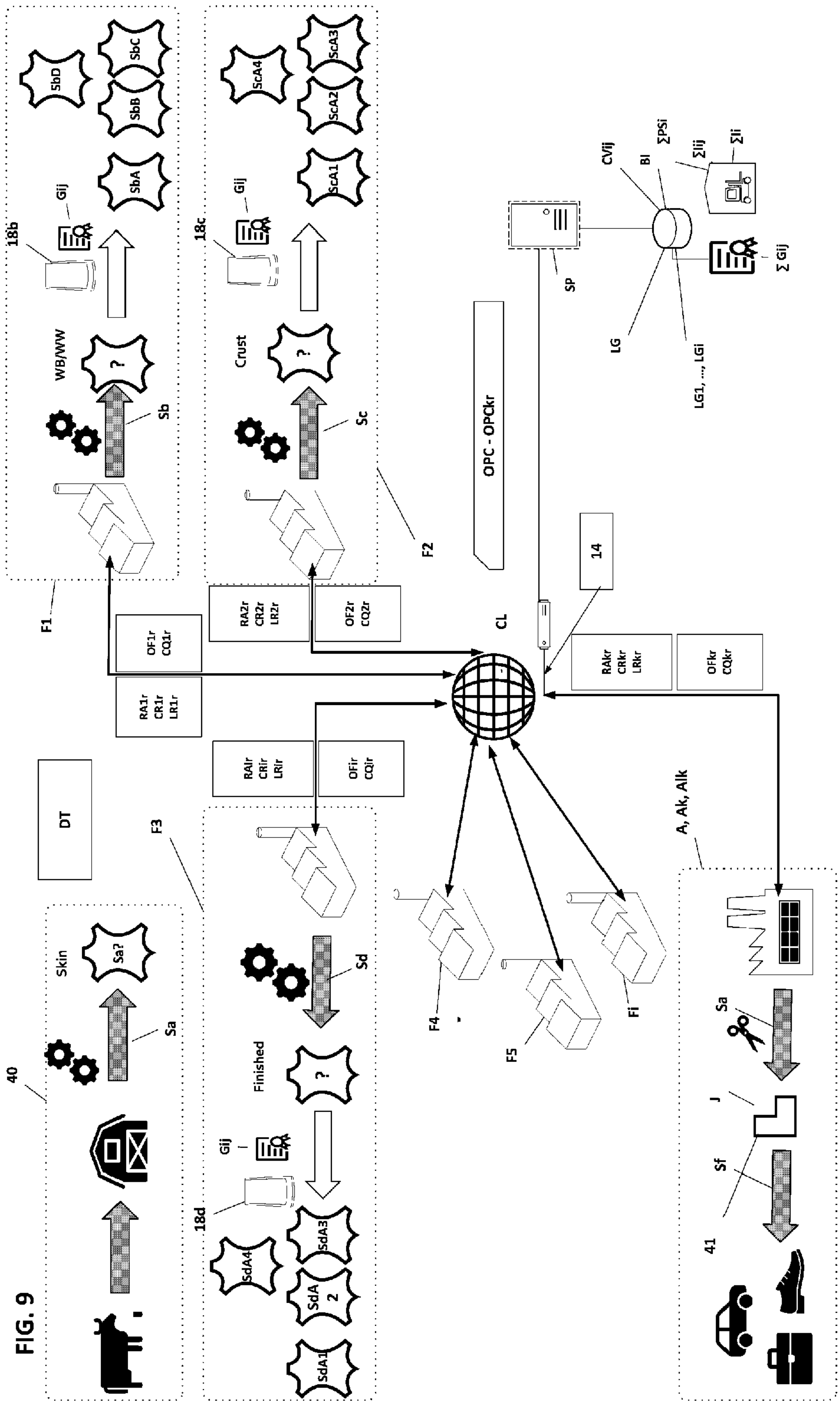
40
Skin
Sa?
Sa
DT
F1
18b
Gij
WB/WW
?
Sb
SbA
SbB
SbC
SbD
OF1r
CQ1r
RA1r
CR1r
LR1r
F2
18c
Crust
Sc
ScA1
ScA2
ScA3
ScA4
RA2r
CR2r
LR2r
OF2r
CQ2r
F3
Finished
Sd
18d
SdA1
SdA 2
SdA3
SdA4
RAIr
CRIr
LRIr
OFIr
CQIr
OPC - OPCkr
CL
14
RAkr
CRkr
LRkr
OFkr
CQkr
SP
CVIj
BI
ΣPSi
ΣIij
ΣIi
Σ Gij
LG
LG1, ..., LGi
F4
F5
Fi
A, Ak, Alk
J
Sf
41
FIG. 9

Europäisches Patentamt
European Patent Office
Office européen des brevets

# RAPPORT DE RECHERCHE EUROPEENNE

Numéro de la demande
EP 20 02 0401

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | WO 2017/083344 A1 (GERBER TECH INC [US]) 18 mai 2017 (2017-05-18)<br>* revendications 1-28 *<br>* figures 1-6 *<br>----- | 1-16 | INV.<br>C14B1/28<br>G06Q10/08<br>G06Q10/00 |
| A | WO 2006/027523 A1 (LECTRA SA [FR]; YEPES SEGOVIA RAMON [ES] ET AL.)<br>16 mars 2006 (2006-03-16)<br>* figures 1-7 *<br>* revendications 1-10 *<br>----- | 1-16 | |
| A,D | EP 2 835 430 A1 (FELTRE SRL [IT])<br>11 février 2015 (2015-02-11)<br>* le document en entier *<br>----- | 1-16 | |
| A,D | US 4 199 255 A (TILLEY LESLIE J [GB] ET AL) 22 avril 1980 (1980-04-22)<br>* revendications 1-5 *<br>* figure 1 *<br>----- | 1-16 | |
| A,D | GB 2 265 032 A (HITACHI LTD [JP])<br>15 septembre 1993 (1993-09-15)<br>* le document en entier *<br>----- | 1-16 | **DOMAINES TECHNIQUES RECHERCHES (IPC)**<br>G06Q<br>C14B<br>G05B |

Le présent rapport a été établi pour toutes les revendications

1

| Lieu de la recherche | Date d'achèvement de la recherche | Examinateur |
|---|---|---|
| Munich | 22 janvier 2021 | Mennerun, Steeve |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................
& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 20 02 0401

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-01-2021

| Document brevet cité au rapport de recherche | Date de publication | Membre(s) de la famille de brevet(s) | Date de publication |
|---|---|---|---|
| WO 2017083344 A1 | 18-05-2017 | CA 3004106 A1 | 18-05-2017 |
| | | CN 108780308 A | 09-11-2018 |
| | | EP 3374833 A1 | 19-09-2018 |
| | | US 2017131703 A1 | 11-05-2017 |
| | | WO 2017083344 A1 | 18-05-2017 |
| WO 2006027523 A1 | 16-03-2006 | BR PI0506374 A | 09-01-2007 |
| | | CA 2541738 A1 | 16-03-2006 |
| | | CN 1897835 A | 17-01-2007 |
| | | EP 1784092 A1 | 16-05-2007 |
| | | FR 2874483 A1 | 03-03-2006 |
| | | HK 1099906 A1 | 31-08-2007 |
| | | IL 174416 A | 30-11-2010 |
| | | JP 4970263 B2 | 04-07-2012 |
| | | JP 2008511889 A | 17-04-2008 |
| | | US 2007169358 A1 | 26-07-2007 |
| | | WO 2006027523 A1 | 16-03-2006 |
| EP 2835430 A1 | 11-02-2015 | AUCUN | |
| US 4199255 A | 22-04-1980 | AUCUN | |
| GB 2265032 A | 15-09-1993 | GB 2265032 A | 15-09-1993 |
| | | JP H05250394 A | 28-09-1993 |
| | | KR 930020293 A | 19-10-1993 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4199255 A
- EP 2835430 B1
- WO 2017083344 A1
- GB 2265032 A
- US 20190180231 A1
- US 20180260764 A1